# EUROPÄISCHE PATENTSCHRIFT

(11) **EP 3 614 618 B1**
(45) Veröffentlichungstag und Bekanntmachung des Hinweises auf die Patenterteilung: **12.06.2024**
(21) Anmeldenummer: 19185761.4
(22) Anmeldetag: 11.07.2019
(51) Int. Cl.: H04W 4/46, H04L 9/40, H04L 9/08

(54) **ERSTES FAHRZEUGSEITIGES ENDGERÄT, VERFAHREN ZUM BETREIBEN DES ERSTEN ENDGERÄTS, ZWEITES FAHRZEUGSEITIGES ENDGERÄT UND VERFAHREN ZUM BETREIBEN DES ZWEITEN FAHRZEUGSEITIGEN ENDGERÄTS**
FIRST VEHICLE SIDE TERMINAL, METHOD FOR OPERATING THE FIRST TERMINAL, SECOND VEHICLE SIDE TERMINAL AND METHOD FOR OPERATING THE SECOND VEHICLE SIDE TERMINAL
PREMIER TERMINAL COTÉ VÉHICULE, PROCÉDÉ DE FONCTIONNEMENT DU PREMIER TERMINAL, SECOND TERMINAL COTÉ VÉHICULE ET PROCÉDÉ DE FONCTIONNEMENT DU SECOND TERMINAL COTÉ VÉHICULE

(30) Priorität: 24.08.2018 DE 102018214354
(43) Veröffentlichungstag der Anmeldung: 26.02.2020
(73) Patentinhaber: Robert Bosch GmbH, 70442 Stuttgart (DE)
(72) Erfinder: Zimmermann, Christian, 70197 Stuttgart (DE); Bissmeyer, Norbert, 45525 Hattingen (DE)

(56) Entgegenhaltungen:
- US-A1- 2016 218 865
- HASROUNY HAMSSA ET AL: "Trust model for secure group leader-based communications in VANET", WIRELESS NETWORKS, ACM, 2 PENN PLAZA, SUITE 701 - NEW YORK USA, Bd. 25, Nr. 8, 17. Mai 2018 (2018-05-17), Seiten 4639-4661, XP036924838, ISSN: 1022-0038, DOI: 10.1007/S11276-018-1756-6 [gefunden am 2018-05-17]
- MAXIM RAYA ET AL: "Securing vehicular ad hoc networks", JOURNAL OF COMPUTER SECURITY, Bd. 15, Nr. 1, 1. Januar 2007 (2007-01-01) , Seiten 39-68, XP055321402, NL ISSN: 0926-227X, DOI: 10.3233/JCS-2007-15103

## Beschreibung

### Stand der Technik

Die Erfindung betrifft ein erstes fahrzeugseitiges Endgerät, ein Verfahren zum Betreiben des ersten Endgeräts, ein zweites fahrzeugseitiges Endgerät und ein Verfahren zum Betreiben des zweiten fahrzeugseitigen Endgeräts.

US 2016/0218865 A1 offenbart eine Vorrichtung für die drahtlose Kommunikation, welche eine Schlüssel-Logik enthält, die so konfiguriert ist, dass sie einen Kandidaten-Gruppenschlüssel erhält, der einer Datenverbindungsgruppe entspricht. Die Vorrichtung enthält auch eine drahtlose Schnittstelle, die so konfiguriert ist, dass sie eine Ankündigungsnachricht an eine oder mehrere Vorrichtungen der Datenverbindungsgruppe während eines für die Datenverbindungsgruppe bestimmten Paging-Fensters überträgt. Die Ankündigungsnachricht enthält eine Multicast-Nachricht und zeigt die Verfügbarkeit des Kandidatengruppenschlüssels und der Ankündigungsnachricht an.

HASROUNY HAMSSA ET AL: "Trust model for secure group leader based communications in VANET", 17. Mai 2018 (2018-05-17), Seiten 4639-4661 XP036924838, ISSN: 1022-0038, DOI: 10.1007/S11276-018-1756-6 offenbart ein Vertrauensmodell für sichere gruppenleiterbasierte Kommunikation in VANET.

### Offenbarung der Erfindung

Die Probleme des Standes der Technik werden durch ein erstes fahrzeugseitiges Endgerät nach dem Anspruch 1, ein Verfahren zum Betreiben des ersten Endgeräts nach einem nebengeordneten Anspruch, ein zweites fahrzeugseitiges Endgerät nach einem nebengeordneten Anspruch und ein Verfahren zum Betreiben des zweiten fahrzeugseitigen Endgeräts nach einem nebengeordneten Anspruch gelöst.

Gemäß einem Aspekt dieser Beschreibung wird ein erstes fahrzeugseitiges Endgerät einer Gruppe von Endgeräten eines Funkkommunikationsnetzwerks bereitgestellt, wobei die Gruppe von Endgeräten ein zweites fahrzeugseitiges Endgerät aufweist, wobei das erste fahrzeugseitige Endgerät mindestens einen Prozessor, mindestens einen Speicher mit Computerprogrammcode, mindestens ein Kommunikationsmodul und mindestens eine Antenne umfasst, wobei der Computerprogrammcode so konfiguriert ist, dass er mit dem mindestens einen Prozessor, dem mindestens einen Kommunikationsmodul und der mindestens einen Antenne bewirkt, dass das erste fahrzeugseitige Endgerät wenigstens einen symmetrischen Gruppenschlüssel, welcher der Gruppe von Endgeräten zugeordnet ist, ermittelt, den wenigstens einen symmetrischen Gruppenschlüssel mit einem symmetrischen Paarschlüssel, welcher dem ersten und dem zweiten fahrzeugseitigen Endgerät zugeordnet ist, verschlüsselt, den verschlüsselten symmetrischen Gruppenschlüssel in Richtung des zweiten fahrzeugseitigen Endgeräts versendet, eine verschlüsselte Nachricht von dem zweiten fahrzeugseitigen Endgerät empfängt, und die verschlüsselte Nachricht in Abhängigkeit von dem ermittelten symmetrischen Gruppenschlüssel entschlüsselt, einen neuen symmetrischen Gruppenschlüssel ermittelt, den neuen symmetrischen Gruppenschlüssel in Abhängigkeit von dem symmetrischen Paarschlüssel, welcher dem zweiten fahrzeugseitigen Endgerät zugeordnet ist, verschlüsselt, und den verschlüsselten neuen symmetrischen Gruppenschlüssel in Richtung des zweiten fahrzeugseitigen Endgeräts versendet, eine positive Empfangsbestätigung, welche den Empfang des neuen symmetrischen Gruppenschlüssels durch das zweite fahrzeugseitige Endgerät bestätigt, empfängt, einen neuen symmetrischen Paarschlüssel, welcher nur dem ersten und dem zweiten fahrzeugseitigen Endgerät zugeordnet ist, in Abhängigkeit von dem Empfang der positiven Empfangsbestätigung ermittelt, und den neuen symmetrischen Paarschlüssel als gültigen symmetrischen Paarschlüssel auswählt.

Die sichere Verteilung und Verwendung des symmetrischen Gruppenschlüssels unter Verwendung des öffentlichen Schlüssels oder des symmetrischen Paarschlüssels bei der Fahrzeugkommunikation bringt mehrere Vorteile mit sich. Der symmetrische Gruppenschlüssel wird auf diese Weise vorteilhaft an jedes Endgerät der Gruppe von Endgeräten zum Zwecke der sicheren gruppeninternen Kommunikation verteilt. Gegenüber asymmetrischen Verschlüsselungsverfahren ergeben sich Vorteile hinsichtlich des Rechenaufwands und hinsichtlich der resultierenden Größe der verschlüsselten Daten. Damit kann die Nachricht schnell verschlüsselt und schnell entschlüsselt werden, was die Latenz zwischen Nachrichtenerzeugung auf der Seite des zweiten fahrzeugseitigen Endgeräts und der Nachrichtenverarbeitung auf der Seite des ersten fahrzeugseitigen Endgeräts oder weiteren der Gruppe zugehörigen fahrzeugseitigen Endgeräten reduziert.

Durch die Reduktion der Datengröße und die Reduktion des Rechenaufwands ergeben sich vorgenannten verringerten Latenzen für Nachrichten, welche mit dem symmetrischen Gruppenschlüssel verschlüsselt über den Funkkanal versendet werden. Insbesondere für kolonnen-fahrende Fahrzeuge, einem sogenannten Platoon, bedeutet das, dass Sicherheitsabstände zwischen den Fahrzeugen verringert werden können. Folglich ergeben sich aufgrund der verbesserten Ausnutzung des Windschattens vorausfahrender Fahrzeuge Potenziale zur Einsparung von Treibstoff bzw. Antriebsenergie.

Des Weiteren wird durch einen regelmäßigen Wechsel des Gruppenschlüssels und des Paarschlüssels der Schutz der Privatheit der Kommunikation zwischen den fahrzeugseitigen Endgeräten verbessert.

Ein vorteilhaftes Beispiel kennzeichnet sich dadurch aus, dass das erste fahrzeugseitige Endgerät eine verschlüsselte Beitrittsanfrage ausgehend von dem zweiten fahrzeugseitigen Endgerät empfängt, die Beitrittsanfrage in Abhängigkeit von einem privaten asymmetrischen Schlüssel, welcher dem ersten fahrzeugseitigen Endgerät zugeordnet ist, entschlüsselt, wenigstens zwei symmetrische Gruppenschlüssel, welche der Gruppe von Endgeräten zugeordnet sind, ermittelt, den symmetrischen Paarschlüssel ermittelt, die wenigstens zwei symmetrischen Gruppenschlüssel und den ermittelten symmetrischen Paarschlüssel mit einem öffentlichen asymmetrischen Individualschlüssel, welcher dem zweiten Endgerät zugeordnet ist, verschlüsselt, und die wenigstens zwei verschlüsselten symmetrischen Gruppenschlüssel und den ermittelten verschlüsselten symmetrischen Paarschlüssel in Richtung des zweiten fahrzeugseitigen Endgeräts versendet.

Vorteilhaft wird bereits bei dem Anmeldevorgang, bei dem das zweite fahrzeugseitige Endgerät in die Gruppe von Endgeräten aufgenommen wird, ein Übergang von einer asymmetrischen Verschlüsselung auf die latenzfreundlichere symmetrische Verschlüsselung durchgeführt.

Ein vorteilhaftes Beispiel kennzeichnet sich dadurch aus, dass das erste fahrzeugseitige Endgerät einen Wechsel des symmetrischen Gruppenschlüssels ermittelt, einen bereits in der Gruppe verteilten symmetrischen Gruppenschlüssel als gültigen symmetrischen Gruppenschlüssel auswählt, einen neuen symmetrischen Gruppenschlüssel ermittelt, den neuen symmetrischen Gruppenschlüssel in Abhängigkeit von dem symmetrischen Paarschlüssel, welcher dem zweiten fahrzeugseitigen Endgerät zugeordnet ist, verschlüsselt, und den verschlüsselten neuen symmetrischen Gruppenschlüssel in Richtung des zweiten fahrzeugseitigen Endgeräts versendet.

Vorteilhaft wird durch dieses Wechselschema für den Gruppenschlüssel erreicht, dass die Auswahl des Gruppenschlüssels unmittelbar erfolgen kann. Das bedeutet, dass die Ermittlung und der Versand des Gruppenschlüssels von der Auswahl des Gruppenschlüssels als zur Verschlüsselung gültiger Gruppenschlüssel entkoppelt sind.

Vorteilhaft wird durch die endgeräte-individuelle Ermittlung des Paarschlüssels eine sich wiederholende Übertragung des Paarschlüssels über den Funkkanal vermieden. Des Weiteren findet durch das Abwarten der Empfangsbestätigung eine Synchronisation der endgeräte-individuellen Ermittlung des neuen symmetrischen Paarschlüssels, welcher dem zweiten Endgerät zugeordnet ist, statt.

Ein vorteilhaftes Beispiel kennzeichnet sich dadurch aus, dass das erste fahrzeugseitige Endgerät eine Austrittsanfrage ausgehend von einem dritten Endgerät empfängt, einen weiteren neuen symmetrischen Gruppenschlüssel ermittelt, den weiteren neuen symmetrischen Gruppenschlüssel und eine Austrittsindikation in Abhängigkeit von dem symmetrischen Paarschlüssel, welcher dem zweiten Endgerät zugeordnet ist, verschlüsselt, den verschlüsselten weiteren neuen symmetrischen Gruppenschlüssel und die Austrittsindikation in Richtung des zweiten fahrzeugseitigen Endgeräts versendet, den weiteren neuen symmetrischen Gruppenschlüssel als aktuell gültigen Gruppenschlüssel auswählt, einen weiteren neuen symmetrischen Paarschlüssel, welcher dem zweiten fahrzeugseitigen Endgerät zugeordnet ist, ermittelt, und den weiteren neuen symmetrischen Paarschlüssel als gültigen symmetrischen Paarschlüssel auswählt.

Die Austrittsanfrage des dritten Endgeräts triggert einen unmittelbaren Wechsel des symmetrischen Gruppenschlüssels und des symmetrischen Paarschlüssels, was die Angriffssicherheit für die noch in der Gruppe verbleibenden Endgeräte erhöht.

Ein vorteilhaftes Beispiel kennzeichnet sich dadurch aus, dass das erste fahrzeugseitige Endgerät die verschlüsselte Nachricht und eine verschlüsselte Signatur ausgehend von dem zweiten fahrzeugseitigen Endgerät empfängt, die verschlüsselte Nachricht und die verschlüsselte Signatur in Abhängigkeit von dem symmetrischen Gruppenschlüssel entschlüsselt, die Herkunft der Nachricht von dem zweiten fahrzeugseitigen Endgerät in Abhängigkeit von der Signatur und in Abhängigkeit von einem öffentlichen Zertifikat, welches dem zweiten fahrzeugseitigen Endgerät zugeordnet ist, verifiziert.

Vorteilhaft kann auf diese Art und Weise eine Identitätsfälschung durch einen gruppen-internen Angreifer erkannt werden. Das erste Endgerät ist durch die Überprüfung der empfangenen Signatur in der Lage einen solchen gruppen-internen Angriff zu identifizieren und die betroffene Nachricht zu ignorieren oder andere Gegenmaßnahmen einzuleiten.

Ein weiterer Aspekt dieser Beschreibung betrifft ein Verfahren zum Betreiben eines ersten fahrzeugseitigen Endgeräts einer Gruppe von Endgeräten eines Funkkommunikationsnetzwerks, wobei die Gruppe von Endgeräten ein zweites fahrzeugseitiges Endgerät aufweist, wobei das erste fahrzeugseitige Endgerät wenigstens einen symmetrischen Gruppenschlüssel, welcher der Gruppe von Endgeräten zugeordnet ist, ermittelt, den wenigstens einen symmetrischen Gruppenschlüssel mit einem symmetrischen Paarschlüssel, welcher nur dem ersten und dem zweiten fahrzeugseitigen Endgerät zugeordnet ist, verschlüsselt, den verschlüsselten symmetrischen Gruppenschlüssel in Richtung des zweiten fahrzeugseitigen Endgeräts versendet, eine verschlüsselte Nachricht von dem zweiten fahrzeugseitigen Endgerät empfängt, und die verschlüsselte Nachricht in Abhängigkeit von dem symmetrischen Gruppenschlüssel entschlüsselt, einen neuen symmetrischen Gruppenschlüssel ermittelt, den neuen symmetrischen Gruppenschlüssel in Abhängigkeit von dem symmetrischen Paarschlüssel, welcher dem zweiten fahrzeugseitigen Endgerät zugeordnet ist, verschlüsselt, und den verschlüsselten neuen symmetrischen Gruppenschlüssel in Richtung des zweiten fahrzeugseitigen Endgeräts versendet, eine positive Empfangsbestätigung, welche den Empfang des neuen symmetrischen Gruppenschlüssels durch das zweite fahrzeugseitige Endgerät bestätigt, empfängt, einen neuen symmetrischen Paarschlüssel, welcher nur dem ersten und dem zweiten fahrzeugseitigen Endgerät zugeordnet ist, in Abhängigkeit von dem Empfang der positiven Empfangsbestätigung ermittelt, und den neuen symmetrischen Paarschlüssel als gültigen symmetrischen Paarschlüssel auswählt.

Gemäß einem weiteren Aspekt dieser Beschreibung wird ein zweites fahrzeugseitiges Endgerät einer Gruppe von Endgeräten eines Funkkommunikationsnetzwerks bereitgestellt, wobei die Gruppe von Endgeräten ein erstes fahrzeugseitiges Endgerät aufweist, wobei das zweite fahrzeugseitige Endgerät mindestens einen Prozessor, mindestens einen Speicher mit Computerprogrammcode, mindestens ein Kommunikationsmodul und mindestens eine Antenne umfasst, wobei der Computerprogrammcode so konfiguriert ist, dass er mit dem mindestens einen Prozessor, dem mindestens einen Kommunikationsmodul und der mindestens einen Antenne bewirkt, dass das zweite fahrzeugseitige Endgerät wenigstens einen verschlüsselten symmetrischen Gruppenschlüssel, welcher der Gruppe von Endgeräten zugeordnet ist, ausgehend von dem ersten fahrzeugseitigen Endgerät empfängt, den wenigstens einen verschlüsselten symmetrischen Gruppenschlüssel mit einem symmetrischen Paarschlüssel, welcher nur dem ersten und dem zweiten fahrzeugseitigen Endgerät zugeordnet ist, entschlüsselt, eine Nachricht in Abhängigkeit von dem empfangenen entschlüsselten symmetrischen Gruppenschlüssel verschlüsselt, und die verschlüsselte Nachricht in Richtung des ersten fahrzeugseitigen Endgeräts sendet, einen neuen verschlüsselten symmetrischen Gruppenschlüssel empfängt, den verschlüsselten symmetrischen Gruppenschlüssel in Abhängigkeit von dem aktuell gültigen symmetrischen Paarschlüssel entschlüsselt, eine positive Empfangsbestätigung, welche den Empfang des neuen symmetrischen Gruppenschlüssels durch das zweite fahrzeugseitige Endgerät bestätigt, versendet, einen neuen symmetrischen Paarschlüssel, welcher nur dem ersten und dem zweiten fahrzeugseitigen Endgerät zugeordnet ist, in Abhängigkeit von dem Versand der positiven Empfangsbestätigung ermittelt, und den neuen symmetrischen Paarschlüssel als gültigen symmetrischen Paarschlüssel auswählt.

Die sichere Verteilung und Verwendung des symmetrischen Gruppenschlüssels unter Verwendung des öffentlichen Schlüssels oder des symmetrischen Paarschlüssels bei der Fahrzeugkommunikation bringt mehrere Vorteile mit sich. Der symmetrische Gruppenschlüssel wird auf diese Weise vorteilhaft an jedes Endgerät der Gruppe von Endgeräten zum Zwecke der sicheren gruppeninternen Kommunikation verteilt. Gegenüber asymmetrischen Verschlüsselungsverfahren ergeben sich Vorteile hinsichtlich des Rechenaufwands und hinsichtlich der resultierenden Größe der verschlüsselten Daten. Damit kann die Nachricht schnell verschlüsselt und schnell entschlüsselt werden, was die Latenz zwischen Nachrichtenerzeugung auf der Seite des zweiten fahrzeugseitigen Endgeräts und der Nachrichtenverarbeitung auf der Seite des ersten fahrzeugseitigen Endgeräts oder weiteren der Gruppe zugehörigen fahrzeugseitigen Endgeräten reduziert.

Durch die Reduktion der Datengröße und die Reduktion des Rechenaufwands ergeben sich vorgenannten verringerten Latenzen für Nachrichten, welche mit dem symmetrischen Gruppenschlüssel verschlüsselt über den Funkkanal versendet werden. Insbesondere für kolonnen-fahrende Fahrzeuge, einem sogenannten Platoon, bedeutet das, dass Sicherheitsabstände zwischen den Fahrzeugen verringert werden können. Folglich ergeben sich aufgrund der verbesserten Ausnutzung des Windschattens vorausfahrender Fahrzeuge Potenziale zur Einsparung von Treibstoff bzw. Antriebsenergie.

Ein vorteilhaftes Beispiel kennzeichnet sich dadurch aus, dass das zweite fahrzeugseitige Endgerät eine Beitrittsanfrage in Abhängigkeit von einem öffentlichen asymmetrischen Schlüssel, welcher dem ersten fahrzeugseitigen Endgerät zugeordnet ist, verschlüsselt, die verschlüsselte Beitrittsanfrage in Richtung des ersten fahrzeugseitigen Endgeräts versendet, wenigstens zwei verschlüsselte symmetrische Gruppenschlüssel und einen verschlüsselten symmetrischen Paarschlüssel empfängt, die wenigstens zwei verschlüsselten symmetrischen Gruppenschlüssel und den verschlüsselten symmetrischen Paarschlüssel in Abhängigkeit von einem privaten asymmetrischen Individualschlüssel, welcher dem zweiten Endgerät zugeordnet ist, entschlüsselt.

Ein vorteilhaftes Beispiel kennzeichnet sich dadurch aus, dass das zweite fahrzeugseitige Endgerät einen Wechsel des symmetrischen Gruppenschlüssels ermittelt, einen bereits empfangenen symmetrischen Gruppenschlüssel als gültigen symmetrischen Gruppenschlüssel auswählt, einen neuen verschlüsselten symmetrischen Gruppenschlüssel ausgehend von dem ersten fahrzeugseitigen Endgerät empfängt, den neuen verschlüsselten symmetrischen Gruppenschlüssel in Abhängigkeit von dem symmetrischen Paarschlüssel, welcher dem zweiten fahrzeugseitigen Endgerät zugeordnet ist, entschlüsselt.

Vorteilhaft wird durch dieses Wechselschema für den Gruppenschlüssel erreicht, dass die Auswahl des Gruppenschlüssels unmittelbar erfolgen kann. Das bedeutet, die Ermittlung und der Versand des Gruppenschlüssels sind von dessen Auswahl als gültigem Gruppenschlüssel zur Verschlüsselung entkoppelt.

Vorteilhaft wird durch die endgeräte-individuelle Ermittlung des Paarschlüssels eine sich wiederholende Übertragung des Paarschlüssels über den Funkkanal vermieden. Des Weiteren findet durch das Abwarten der Empfangsbestätigung eine Synchronisation der endgeräte-individuellen Ermittlung des neuen symmetrischen Paarschlüssels, welcher dem zweiten Endgerät zugeordnet ist, statt.

Ein vorteilhaftes Beispiel kennzeichnet sich dadurch aus, dass das zweite fahrzeugseitige Endgerät einen verschlüsselten weiteren neuen symmetrischen Gruppenschlüssel und eine verschlüsselte Austrittsindikation empfängt, den weiteren neuen symmetrischen Gruppenschlüssel und die Austrittsindikation in Abhängigkeit von dem symmetrischen Paarschlüssel, welcher dem zweiten Endgerät zugeordnet ist, entschlüsselt, den weiteren neuen symmetrischen Gruppenschlüssel in Abhängigkeit von der Austrittsindikation als aktuell gültigen Gruppenschlüssel auswählt, einen weiteren neuen symmetrischen Paarschlüssel, welcher dem zweiten fahrzeugseitigen Endgerät zugeordnet ist, ermittelt, und den weiteren neuen symmetrischen Paarschlüssel in Abhängigkeit von der Austrittsindikation als gültigen symmetrischen Paarschlüssel auswählt.

Die Austrittsindikation triggert somit einen unmittelbaren Wechsel des symmetrischen Gruppenschlüssels auf den empfangenen Gruppenschlüssel und eine unmittelbare Erneuerung des symmetrischen Paarschlüssels, was die Angriffssicherheit für die noch in der Gruppe verbleibenden Endgeräte erhöht.

Ein vorteilhaftes Beispiel kennzeichnet sich dadurch aus, dass das zweite fahrzeugseitige Endgerät eine Signatur in Abhängigkeit von der Nachricht und in Abhängigkeit von dem privaten asymmetrischen Schlüssel, welcher dem zweiten fahrzeugseitigen Endgerät zugeordnet ist, ermittelt, die Nachricht und die Signatur in Abhängigkeit von dem gültigen symmetrischen Gruppenschlüssel verschlüsselt, und die verschlüsselte Nachricht und die verschlüsselte Signatur in Richtung des ersten fahrzeugseitigen Endgeräts versendet.

Vorteilhaft kann auf diese Art und Weise eine Identitätsfälschung durch einen gruppen-internen Angreifer erkannt werden. Das zweite Endgerät ist durch die Überprüfung der empfangenen Signatur in der Lage einen solchen gruppen-internen Angriff zu identifizieren und die betroffene Nachricht zu ignorieren oder andere Gegenmaßnahmen einzuleiten.

Gemäß einem weiteren Aspekt dieser Beschreibung wird ein Verfahren zum Betreiben eines zweiten fahrzeugseitigen Endgeräts einer Gruppe von Endgeräten eines Funkkommunikationsnetzwerks bereitgestellt, wobei die Gruppe von Endgeräten ein erstes fahrzeugseitiges Endgerät aufweist, wobei das zweite fahrzeugseitige Endgerät wenigstens einen verschlüsselten symmetrischen Gruppenschlüssel, welcher der Gruppe von Endgeräten zugeordnet ist, ausgehend von dem ersten fahrzeugseitigen Endgerät empfängt, den wenigstens einen verschlüsselten symmetrischen Gruppenschlüssel mit einem symmetrischen Paarschlüssel, welcher dem ersten und dem zweiten fahrzeugseitigen Endgerät zugeordnet ist, entschlüsselt, eine Nachricht in Abhängigkeit von dem empfangenen entschlüsselten symmetrischen Gruppenschlüssel verschlüsselt, und die verschlüsselte Nachricht in Richtung des ersten fahrzeugseitigen Endgeräts sendet, einen neuen verschlüsselten symmetrischen Gruppenschlüssel empfängt, den verschlüsselten symmetrischen Gruppenschlüssel in Abhängigkeit von dem aktuell gültigen symmetrischen Paarschlüssel entschlüsselt, eine positive Empfangsbestätigung, welche den Empfang des neuen symmetrischen Gruppenschlüssels durch das zweite fahrzeugseitige Endgerät bestätigt, versendet, einen neuen symmetrischen Paarschlüssel, welcher nur dem ersten und dem zweiten fahrzeugseitigen Endgerät zugeordnet ist, in Abhängigkeit von dem Versand der positiven Empfangsbestätigung ermittelt, und den neuen symmetrischen Paarschlüssel als gültigen symmetrischen Paarschlüssel auswählt.

In der Zeichnung zeigen:
- Figur 1: in schematischer Form ein Funkkommunikationsnetzwerk;
- Figuren 2 bis 5: jeweils ein schematisches Sequenzdiagramm; und
- Figur 6: ein schematisches Blockdiagramm zur Ermittlung und Verarbeitung einer Nachricht.

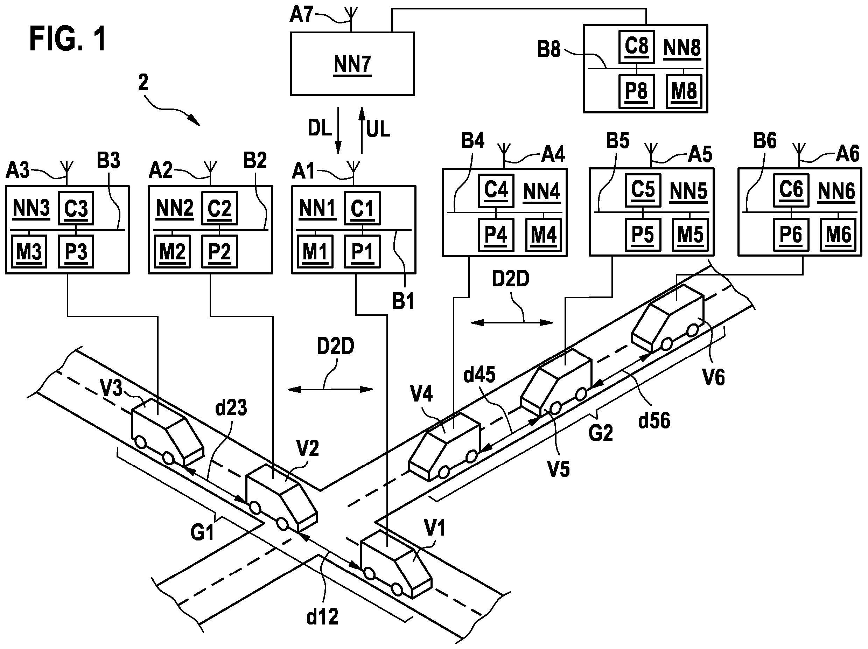

Figur 1 zeigt in schematischer Form ein Funkkommunikationsnetzwerk 2. Eine erste Gruppe G1 von Fahrzeugen V1, V2 und V3 kommuniziert mittels eines jeweiligen fahrzeugseitigen Endgeräts NN1 bis NN3 über wenigstens eine beispielsweise exklusiv zugewiesene D2D-Funkressource D1 (D2D: Device to Device) und koordiniert beispielsweise den Fahrzeugabstand d12, d23 sowie Brems- und Beschleunigungsmanöver des jeweiligen Fahrzeugs V1 bis V3. Eine zweite Gruppe G2 von Fahrzeugen V4, V5 und V6 kommuniziert mittels eines jeweiligen fahrzeugseitigen Endgeräts NN4 bis NN6 über wenigstens eine beispielsweise exklusiv zugewiesene D2D-Funkressource D2 und koordiniert beispielsweise den Fahrzeugabstand d45, d56 sowie Brems- und Beschleunigungsmanöver des jeweiligen Fahrzeugs V4 bis V6. Die wenigstens eine D2D-Funkressource D1, D2 ist beispielsweise durch eine Periodizität von zugewiesenen Bereichen in einem Zeit- und Frequenzraster gekennzeichnet. Durch das Auseinanderfallen der D2D-Funkressourcen D1 und D2 wird die Kommunikation der Gruppen G1 und G2 nicht gegenseitig beeinflusst, obschon sich die Funkreichweiten der beiden Gruppen G1 und G2 überschneiden, d. h., dass das Endgerät NN6 beispielsweise Nachrichten vom Endgerät NN3 empfangen könnte.

Die Endgeräte NN1 bis NN6 unterstützen neben der direkten Kommunikation untereinander die Fähigkeit innerhalb eines zell-gestützten Netzwerks über Uplink-Funkressourcen UL Nachrichten in Richtung einer Infrastruktureinheit NN7, wie beispielsweise einem Remote-Radio-Head, RRH, oder einer Basisstation, eNodeB, zu senden sowie Nachrichten über Downlink-Funkressourcen DL von der Infrastruktureinheit NN7 zu empfangen. Die Uplink- und Downlinkressourcen UL, DL werden zentral beispielsweise von der Infrastruktureinheit NN7 zugewiesen d. h. gescheduled. Die Infrastruktureinheit NN7 umfasst eine Antenne A7. Die Infrastruktureinheit NN7 ist mit der Netzwerkeinheit NN8 zur Kommunikation verbunden. Die D2D-Funkressourcen D1, D2 werden auch als Sidelink-Ressourcen bezeichnet. Die fahrzeugseitigen Endgeräte NN1 bis NN6 nutzen die D2D-Funkressourcen D1, D2, welche nicht zell-gestützt vergeben d. h. gescheduled werden (D2D: Device to Device). Sollte LTE-V2X D2D verwendet werden, besteht auch die Möglichkeit von Scheduling des Sidelink mittels einer zentralen Einheit über einen Downlink-Kontrollkanal.

Die fahrzeugseitigen Endgeräte NN1 bis NN6 umfassen jeweils einen Prozessor P1-P6, ein Kommunikationsmodul C1-C6, eine Antenne A1-A6 und einen Speicher M1-M6. Der Speicher M1-M6 ist jeweils mit einem Computerprogrammcode ausgestattet, der so konfiguriert ist, dass er mit dem mindestens einen Prozessor P1-P6, dem mindestens einen Kommunikationsmodul C1-C6 und der mindestens einen Antenne A1-A6 die in dieser Spezifikation beschriebenen Schritte ausführt. In einem Beispiel verfügen die Kommunikationsmodule C1-C6 über ein in Hardware ausgeführtes Security-Modul zum sicheren Speichern von kryptgraphische Daten.

Die Netzwerkeinheit NN8, umfasst einen Prozessor P8, ein Kommunikationsmodul C8, und einen Speicher M8. Der Speicher M8 ist mit einem Computerprogrammcode ausgestattet.

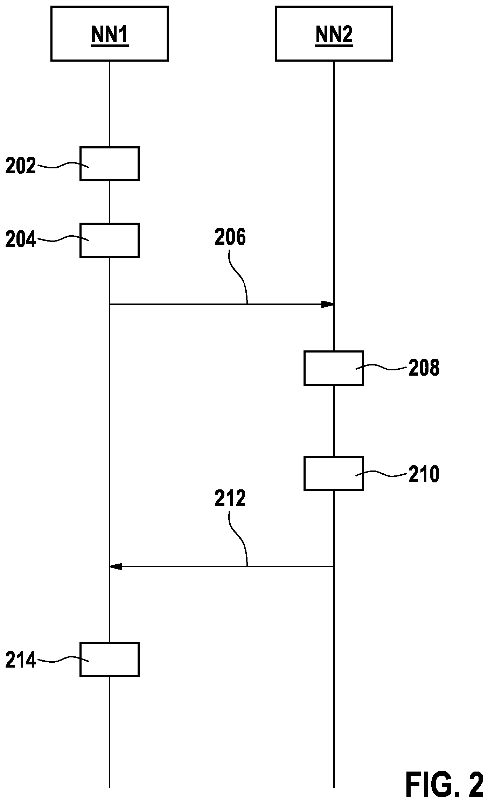

Figur 2 zeigt ein schematisches Sequenzdiagramm zum Betreiben der jeweiligen Endgeräte NN1, NN2. In einem Schritt 202 wird wenigstens ein symmetrischer Gruppenschlüssel, welcher der Gruppe von Endgeräten zugeordnet ist, ermittelt. In einem Schritt 204 wird der wenigstens eine symmetrische Gruppenschlüssel mit einem öffentlichen asymmetrischen Individualschlüssel, welcher dem zweiten fahrzeugseitigen Endgerät NN2 zugeordnet ist, oder mit einem symmetrischen Paarschlüssel, welcher dem ersten und dem zweiten fahrzeugseitigen Endgerät NN1, NN2 zugeordnet ist, verschlüsselt. In einem Schritt 206 wird der verschlüsselte symmetrische Gruppenschlüssel an das zweite fahrzeugseitige Endgeräts NN2 übermittelt.

Das zweite Endgerät NN2 entschlüsselt in einem Schritt 208 den wenigstens einen verschlüsselten symmetrischen Gruppenschlüssel mit einem privaten asymmetrischen Individualschlüssel, welcher dem zweiten fahrzeugseitigen Endgerät zugeordnet ist, oder mit einem symmetrischen Paarschlüssel, welcher dem ersten und dem zweiten fahrzeugseitigen Endgerät NN1, NN2 zugeordnet ist. Das zweite Endgerät NN2 ermittelt eine an das erste Endgerät NN1 bzw. an die Gruppe von Endgeräten zu übermittelnde Nachricht. Das zweite Endgerät NN2 verschlüsselt in einem Schritt 210 die Nachricht in Abhängigkeit von dem empfangenen und entschlüsselten symmetrischen Gruppenschlüssel. In einem Schritt 212 wird die verschlüsselte Nachricht von dem Endgerät NN2 an das Endgerät NN1 übermittelt. Das erste Endgerät NN1 entschlüsselt in einem Schritt 214 die empfangene und verschlüsselte Nachricht.

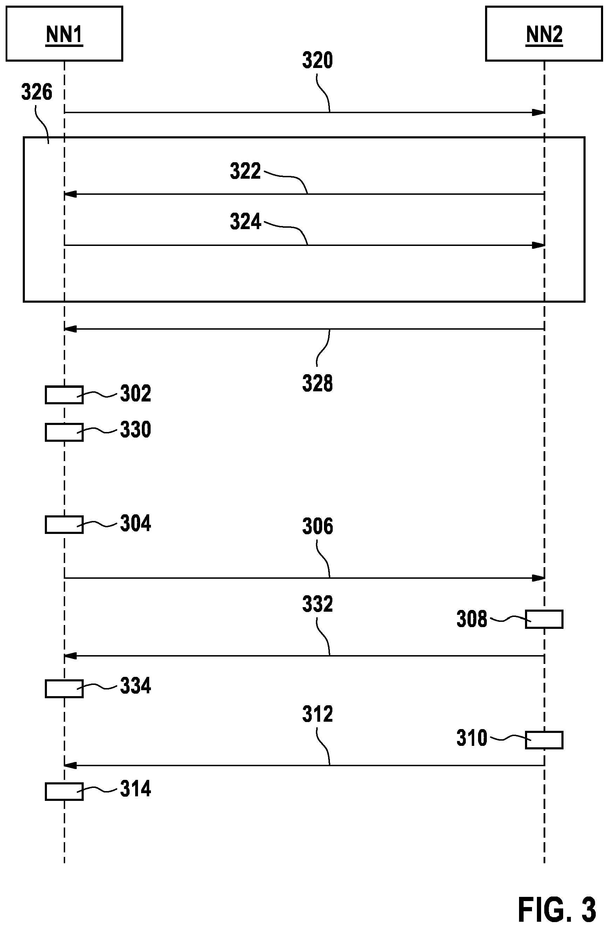

Figur 3 zeigt ein schematisches Sequenzdiagramm zum Betreiben der jeweiligen Endgeräte NN1, NN2. Das Endgerät NN2 ist zu Beginn des gezeigten Sequenzdiagramms noch nicht Teil der Gruppe von Endgeräten. Es ist der Beitritt des zweiten Endgeräts NN2 zu der Gruppe von Endgeräten umfassend wenigstens das Endgerät NN1 gezeigt.

In einem Schritt 320 versendet das erste Endgerät NN1, welches die Rolle eines Platoon-Leader innehat, in regelmäßigen Abständen eine Verfügbarkeitsnachricht als Broadcast-Nachricht, welche beispielsweise mittels eines privaten asymmetrischen Individualschlüssels, beispielsweise nach ECDSA (gemäß ETSI TS 103 097 oder IEEE1609.2; ECDSA: Elliptic Curve Digital Signature Algorithm), signiert ist. Broadcast bedeutet im Falle des Schritts 320 ein Versenden an alle erreichbaren Geräte.

In dieser Beschreibung wird ein Versenden der Nachricht an Endgeräte der zugeordneten Gruppe jedoch ebenso als Broadcast-Nachricht bezeichnet, wobei durch die Verschlüsselung mit dem jeweiligen Gruppen-, Paar- oder Individualschlüssel festgelegt ist, ob eine Unicast- oder Broadcast-Übermittlung vorliegt. Des Weiteren wird den in dieser Beschreibung ermittelten Nachrichten jeweils ein Zeitstempel hinzugefügt, um sogenannte Replay-Attacken zu verhindern. Auf der Empfängerseite wird der mit der Nachricht empfangene Zeitstempel überprüft. In einem weiteren Beispiel umfassen die zwischen den Gruppenmitgliedern bzw. Endgeräten der Gruppe ausgetauschten Nachrichten eine Sequenznummer, um einen Nachrichtenverlust und/oder die vorgenannte Replay-Attacke zu erkennen.

In einem Schritt 322 übermittelt das Endgerät NN2 eine Unicast-Anfrage an das Endgerät NN1, wobei die Anfrage mittels des privaten asymmetrischen Individualschlüssels, welcher dem Endgerät NN2 zugeordnet ist, signiert ist. Auf die im Schritt 322 übermittelte Unicast-Anfrage versendet das erste Endgerät NN1 in einem Schritt 324 eine Unicast-Antwort an das zweite Endgerät NN2, wobei die Unicast-Antwort Gruppendetails wie beispielsweise die gewählte Route, die Gruppe umfassende Gefahrenstoff-Transporter oder Ähnliches umfasst, und wobei die Unicast-Antwort mit dem privaten asymmetrischen Individualschlüssel des ersten Endgeräts signiert und mit dem öffentlichen asymmetrischen Schlüssel des zweiten Endgeräts verschlüsselt ist. Gemäß einem Block 326 sind die Schritte 322, 324 optional.

In einem Schritt 328 teilt das zweite Endgerät NN2 dem ersten Endgerät NN1 mit, dass es der von dem ersten Endgerät NN1 verwalteten Gruppe beitreten möchte, wobei eine entsprechende Nachricht mit dem privaten asymmetrischen Individualschlüssel des zweiten Endgeräts NN2 signiert und mit dem öffentlichen asymmetrischen Schlüssel des ersten Endgeräts NN1 verschlüsselt wird.

Die im Schritt 328 durchgeführte Verschlüsselung wird beispielsweise gemäß ECIES (Elliptic Curve Integrated Encryption Scheme) und AES-CCM in Abhängigkeit von dem öffentlichen asymmetrischen Schlüssel des Kommunikationspartners - vorliegend des ersten Endgeräts NN1 - durchgeführt, wobei der öffentliche asymmetrische Schlüssel in einem dem ersten Endgerät NN1 zugeordneten Zertifikat gemäß ETSI 103 097 und/oder IEE 1609.2 angeordnet ist. Diese zum Schritt 328 durchgeführten Schritte sind selbstverständlich auf die weiteren ähnlichen Schritte in der nachfolgenden Beschreibung übertragbar.

In einem Schritt 302 werden wenigstens zwei symmetrische Gruppenschlüssel für die Gruppe von Endgeräten ermittelt oder bereits generierte wenigstens zwei symmetrische Gruppenschlüssel ausgewählt.

In einem Schritt 330 wird von dem ersten Endgerät NN1 der symmetrische Paarschlüssel, welcher dem zweiten Endgerät NN2 zugeordnet wird, ermittelt.

In einem Schritt 304 werden die wenigstens zwei symmetrischen Gruppenschlüssel und der symmetrische Paarschlüssel mit dem dem ersten Endgerät NN1 zugeordneten privaten asymmetrischen Individualschlüssel signiert und mit dem öffentlichen asymmetrischen Schlüssel des zweiten Endgeräts NN2 verschlüsselt.

Die im Schritt 304 signierten und verschlüsselten zwei symmetrischen Gruppenschlüssel und der ebenso signierten und verschlüsselten symmetrische Paarschlüssel werden in einem Schritt 306 im Sinne einer Beitrittsannahme an das zweite Endgerät NN2 übermittelt, wobei die Beitrittsannahme mit dem dem zweiten Endgerät NN2 zugeordneten privaten asymmetrischen Individualschlüssel signiert und mit dem öffentlichen asymmetrischen Schlüssel des ersten Endgeräts NN1 verschlüsselt ist. Durch das sich an die Schritte 304 und 306 anschließende Verwenden des symmetrischen Gruppenschlüssels zum Verschlüsseln von für die Gruppe bestimmten Informationen können selbst statische Informationen, welche innerhalb der Gruppe ausgetauscht werden und beispielsweise eine Information über den Signer der Nachricht enthalten, von außerhalb der Gruppe nicht nachverfolgt werden, womit das Angriffspotenzial reduziert wird.

Das zweite Endgerät NN2 entschlüsselt in einem Schritt 308 die im Schritt 306 empfangene Nachricht umfassend die wenigstens zwei symmetrischen Gruppenschlüssel, den symmetrischen Paarschlüssel sowie eine Signatur und überprüft in Abhängigkeit von der empfangenen Signatur die Herkunft der Nachricht von dem ersten Endgerät NN1. In einem Schritt 332 bestätigt das erste Endgerät NN2 dem ersten Endgerät NN2 den Beitritt zur Gruppe, wobei eine entsprechende Nachricht mit dem gültigen symmetrischen Gruppenschlüssel verschlüsselt ist.

Die im Schritt 332 versandte Nachricht umfasst beispielsweise eine Signatur, welche in Abhängigkeit von versendeten Daten und dem privaten asymmetrischen Schlüssel des zweiten Endgeräts NN2 ermittelt wird. In einem Schritt 334 überprüft das erste Endgerät NN1 die Herkunft der im Schritt 332 empfangenen Nachricht in Abhängigkeit von der empfangenen Signatur und in Abhängigkeit von einem Zertifikat, welches dem zweiten Endgerät NN2 zugeordnet ist.

Es wird insbesondere im Schritt 334 überprüft, ob das zweite Endgerät NN2 eine korrekte Teilnehmerkennung verwendet. Der Schritt 334 wird von jedem Endgerät der Gruppe selbstständig ausgeführt, da die im Schritt 332 versendeten Nachricht durch die Verschlüsselung mit dem symmetrischen Gruppenschlüssel von jedem Teilnehmer bzw. jedem Endgerät der Gruppe empfangbar und entschlüsselbar ist.

Im Schritt 310 werden Daten wie beispielsweise Position, Geschwindigkeit usw., welche an das erste Endgerät NN1 in regelmäßigen Zeitabständen d.h. periodisch übermittelt werden sollen, mit dem aktuell gültigen symmetrischen Gruppenschlüssel verschlüsselt. Dem Schritt 310 verschlüsselten Daten werden im Schritt 312 an das erste Endgerät NN1 übermittelt, welches in einem Schritt 314 die empfangenen verschlüsselten Daten in Abhängigkeit von dem symmetrischen Gruppenschlüssel entschlüsselt. In einem ersten Beispiel wird diesen regelmäßig zu übermittelten Daten eine Signatur beigefügt, welche in Abhängigkeit von den zu übermittelnden Daten und in Abhängigkeit von einem privaten asymmetrischen Schlüssel ermittelt wird. In einem zweiten Beispiel wird diesen regelmäßig zu übermittelnden Daten keine Signatur beigefügt, den anderen hier erwähnten protokoll-spezifischen Nachrichten hingegen schon.

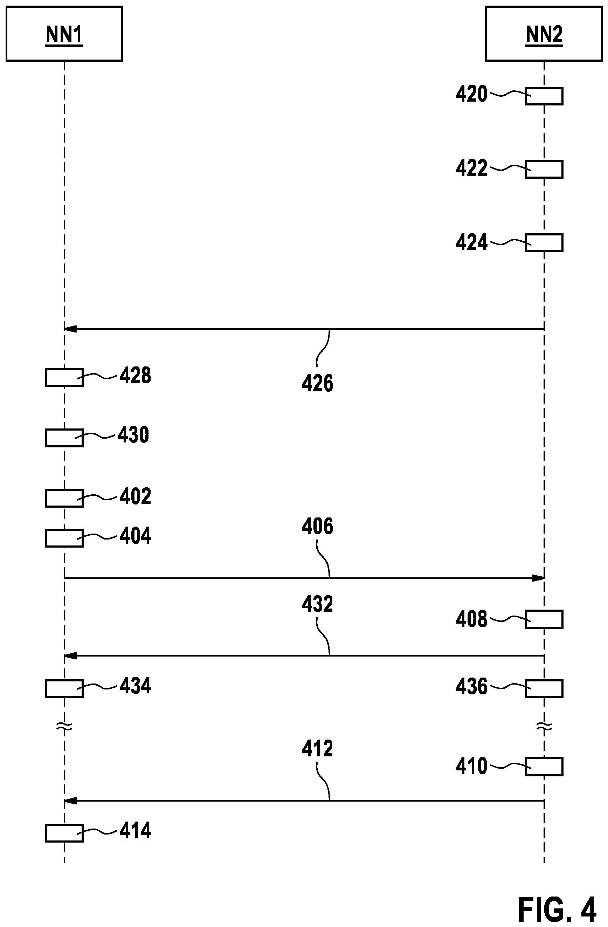

Figur 4 zeigt ein schematisches Sequenzdiagramm zum Betreiben der jeweiligen Endgeräte NN1, NN2. In einem Schritt 420 führt das zweite Endgerät NN2 einen Wechsel einer Kennung durch. Dies kann beispielsweise analog zu der Spezifikation ETSI TR 103 415 erfolgen, wobei der Wechsel beispielsweise von einer gefahrenen Strecke seit dem letzten Wechsel, einer gefahrenen Zeit seit dem letzten Wechsel erfolgt. Das Endgerät NN2 entscheidet somit selbstständig über den Wechselzeitpunkt und koordiniert diesen zunächst nicht mit anderen Gruppenmitgliedern. Ist der Wechselzeitpunkt einmal ermittelt, so führt das Endgerät NN2 selbstständig den Schlüsselwechsel des Gruppenschlüssels durch und teilt dies entweder separat oder durch Verwendung des aktuell gültigen und durch das Endgerät NN2 ausgewählten Gruppenschlüssels bei einer übermittelten und mit dem ausgewählten Gruppenschlüssel verschlüsselten Nachricht den anderen Endgeräten der Gruppe mit. Selbstverständlich kann auch das erste Endgerät NN1 oder ein anderes Endgerät der Gruppe selbstständig ein Wechsel des Gruppenschlüssels initiieren.

Dem zweiten Endgerät NN2 liegen wenigstens zwei symmetrische Gruppenschlüssel vor, womit in einem Schritt 422 der nächste noch nicht verwendete Gruppenschlüssel als gültiger symmetrischer Gruppenschlüssel ausgewählt wird. Im Schritt 422 wird der symmetrische Schlüssel und damit die Identität/Kennung des Schlüssels gewechselt. Im Schritt 422 werden alle zuvor verwendeten symmetrischen Gruppenschlüssel wenigstens für einen Versand von Nachrichten gesperrt oder gelöscht.

In einem Schritt 424 wird ein Wechsel der Gerätekennung so lange verhindert, solange noch kein neuer Gruppenschlüssel im lokalen Speicher des zweiten Endgeräts NN2 vorhanden ist, welcher als neuer gültiger Gruppenschlüssel auswählbar wäre.

In einem Schritt 426 übermittelt das zweite Endgerät NN2 eine regelmäßig zu übermittelnde Nachricht mit potenziell unterschiedlichem Inhalt beispielsweise umfassend Geschwindigkeit und/oder Position des zweiten Endgeräts NN2 an das Endgerät NN1 bzw. die Gruppe von Endgeräten, wobei die Nachricht mit dem im Schritt 422 ausgewählten gültigen symmetrischen Gruppenschlüssel verschlüsselt ist.

Das erste Endgerät NN1 erkennt in einem Schritt 428 in Abhängigkeit von der Nachricht aus dem Schritt 426 - beispielsweise anhand einer empfangenen Schlüsselkennung, dass von dem Endgerät NN2 der gültige symmetrische Gruppenschlüssel gewechselt wurde. Im Schritt 428 wird der nächste bereits vorliegende symmetrische Gruppenschlüssel ausgewählt, sodass nach dem Schritt 428 die beiden Endgeräte NN1 und NN2 den gleichen symmetrischen Gruppenschlüssel verwenden.

Gemäß einem Schritt 430 wird ein Wechsel der Kennung des Endgeräts so lange verhindert, solange noch kein neuer Gruppenschlüssel im lokalen Speicher des Endgeräts NN1 vorhanden ist, welcher als neuer Gruppenschlüssel auswählbar wäre.

In einem Schritt 402 ermittelt das Endgerät NN1 wenigstens einen neuen symmetrischen Gruppenschlüssel, welcher in einem Schritt 404 mit dem symmetrischen Paarschlüssel des zweiten Endgeräts NN2 verschlüsselt wird. In einem Schritt 406 wird der im Schritt 404 verschlüsselte neue symmetrische Gruppenschlüssel an das zweite Endgerät NN2 übermittelt.

In einem Schritt 408 wird der empfangene verschlüsselte symmetrische Gruppenschlüssel in Abhängigkeit von dem symmetrischen Paarschlüssel, welcher nur den beiden Endgeräten NN1, NN2 zugeordnet ist, entschlüsselt und abgespeichert, wobei der aktuell gültige symmetrische Paarschlüssel weiterhin gültig bleibt. Der empfangene symmetrische Gruppenschlüssel dient dazu, um bei einem folgenden Änderungsereignis gemäß dem Schritt 420 verwendet zu werden. In einem Schritt 432 wird eine positive Empfangsbestätigung bezüglich des im Schritt 406 übermittelten Gruppenschlüssels an das Endgerät NN1 übermittelt, wobei die positive Empfangsbestätigung mit dem symmetrischen Paarschlüssel verschlüsselt wird. Nach Durchführen des Schritts 432 führen beide Endgeräte NN1, NN2 gemäß jeweiligen Schritten 434 und 436 einen Wechsel des symmetrischen Paarschlüssels durch, wobei der danach gültige symmetrische Paarschlüssel in Abhängigkeit von dem zuvor gültigen Paarschlüssel ermittelt wird, beispielsweise unter Anwendung einer KDF (Key Derivation Function) auf den zuvor gültigen Paarschlüssel, um für die Endgeräte NN1 und NN2 dasselbe Ergebnis zu bekommen. Ein Beispiel für eine KDF ist das HMAC-SHA256-Verfahren, welches mit dem aktuell gültigen symmetrischen Paarschlüssel als Eingangsparameter den neuen symmetrischen Paarschlüssel ermittelt. Der Schritt 432 triggert somit die Ausführung der Schritte 434 und 436 und stellt damit einen synchronisierten Wechsel des symmetrischen Paarschlüssels sicher. In einem alternativen Beispiel wird der gültige symmetrische Paarschlüssel in Abhängigkeit von einem gemeinsamen zufallsbasierten Ausgangswert und einem Zähler, welcher im initialen Schlüsselaustausch übermittelt wird, ermittelt, wobei für den HMAC-SHA256 der symmetrische Paarschlüssel als Nachricht und der Zähler als Schlüssel verwendet wird. Der nächste Austausch des symmetrischen Gruppenschlüssels wird somit durch die jeweils selbstständige Ermittlung des Paarschlüssels und die entsprechende Verschlüsselung des symmetrischen Gruppenschlüssels mit dem Paarschlüssel abgesichert. Die Schritte 406, 408, 432, 434 und 436 werden für jedes Mitglied bzw. Endgerät der durch das Endgerät NN1 verwalteten Gruppe durchgeführt, wobei die Verschlüsselung für jeden Teilnehmer individuell vorgenommen wird.

Da die Endgeräte NN1 und NN2 sicherstellen müssen, dass eine versendete Nachricht den anderen Kommunikationspartner erreicht, wartet beispielsweise das Endgerät NN2 nach dem Schritt 432 eine Zeitdauer ab und fährt erst nach Ablauf der Zeitdauer mit dem Schritt 436 fort. So stellt das Endgerät NN2 sicher, dass die Nachricht aus dem Schritt 432 das Endgerät NN1 erreicht hat. Das Endgerät NN1 startet nach dem Absenden im Schritt 406 einen Timer und wiederholt den Versand der Nachricht aus dem Schritt 406 so lange, bis die Nachricht im Schritt 432 vom Endgerät NN1 empfangen wurde.

In einem Schritt 410 wird eine an das erste Endgerät NN1 zu sendende Nachricht mit dem in den Schritten 422 und 402 ausgewählten gültigen Gruppenschlüssel verschlüsselt, um nach dem Versenden im Schritt 412 auf der Seite des Endgeräts NN1 in einem Schritt 414 entschlüsselt zu werden.

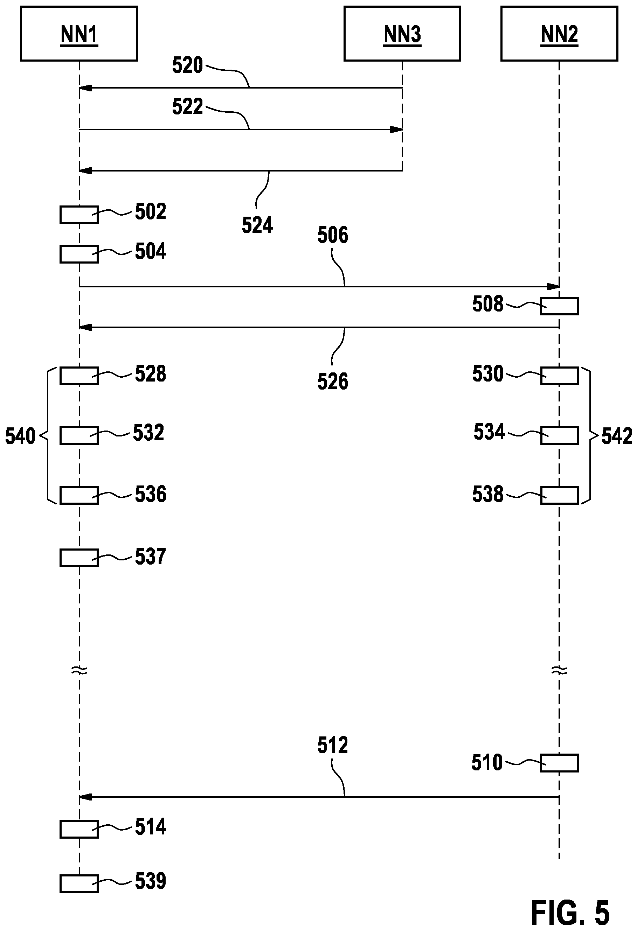

Figur 5 zeigt ein schematisches Ablaufdiagramm zum Betreiben der jeweiligen Endgeräte NN1, NN2, NN3. Es ist gezeigt, wie das Endgerät NN3 die Gruppe von Endgeräten verlässt und welche Mechanismen die Kommunikation unter den verbleibenden Endgeräten NN1, NN2 absichert. In einem Schritt 520 übermittelt das Endgerät NN3 eine mit dem aktuell gültigen symmetrischen Gruppenschlüssel verschlüsselte Austrittsanfrage an die Mitglieder der Gruppe, insbesondere an das Endgerät NN1. In Antwort auf die in Schritt 520 übermittelte Austrittsanfrage bestätigt das Endgerät NN1 in einem Schritt 522 dem Endgerät NN3 die Austrittsanfrage mittels einer entsprechend mit dem symmetrischen Gruppenschlüssel verschlüsselten Nachricht. Das Endgerät NN3 bestätigt die im Schritt 522 erhaltene Nachricht in einem Schritt 524 und ist damit nicht mehr Teil der Gruppe von Endgeräten NN1, NN2. Optional werden die in den Schritten 520, 522, 524 ausgetauschten Nachrichten mit einer Signatur versehen.

In einem Schritt 502 wird ein neuer symmetrischer Gruppenschlüssel ermittelt, welcher in einem Schritt 504 in Abhängigkeit von dem aktuell gültigen symmetrischen Paarschlüssel verschlüsselt wird. In einem Schritt 506 wird der verschlüsselte neue symmetrische Gruppenschlüssel und eine verschlüsselte Austrittsindikation, welche den Austritt des Endgeräts NN3 aus der Gruppe von Endgeräten signalisiert, an das Endgerät NN2 übermittelt, welches diesen verschlüsselten symmetrischen Gruppenschlüssel in einem Schritt 508 entschlüsselt. Der Erhalt des neuen symmetrischen Gruppenschlüssels wird in einem Schritt 526 dem ersten Endgerät NN1 bestätigt. Nach dem Schritt 526 ermitteln die verbliebenen Endgeräte in jeweiligen Schritten 528 und 530 in Abhängigkeit von der Austrittsindikation eigenständig einen neuen symmetrischen Paarschlüssel, wobei diese Schritte für jedes Paar von Kommunikationspartnern gemäß Endgeräten NN1, NN2 in der Gruppe ermittelt wird. In jeweiligen Schritten 532 und 534 wird der neue, im Schritt 502 ermittelte symmetrische Gruppenschlüssel als aktuell gültiger Gruppenschlüssel ausgewählt und sämtliche ältere Gruppenschlüssel zum Versenden von Nachrichten gesperrt bzw. alle alten Gruppenschlüssel werden gelöscht. Das zweite Endgerät NN2 ermittelt also den neuen symmetrischen Paarschlüssel, sobald es die Austrittsindikation empfangen hat, und wählt diesen neuen symmetrischen Paarschlüssel als gültigen Paarschlüssel aus. Im Falle einer fehlerhaften Austrittserklärung des dritten Endgeräts NN3 verteilt das erste Endgerät NN1 keinen neuen Gruppenschlüssel und versendet auch keine Austrittsindikation.

In jeweiligen Schritten 536 und 538 wird ein Wechsel der Kennung des jeweiligen Endgeräts blockiert, solange noch kein neuer Gruppenschlüssel im lokalen Speicher vorhanden sind, der als gültiger Schlüssel auswählbar wäre.

Die zusammengefassten Schritte 540 und 542 werden im Wesentlichen parallel zueinander durchgeführt und sind durch den vorangehenden Schritt 526 zueinander synchronisiert.

In einem Schritt 537 erkennt das erste Endgerät NN1, dass für den gültigen symmetrischen Gruppenschlüssel kein Nachfolger im lokalen Speicher des Endgeräts NN1 vorhanden ist. Das Endgerät NN1 ermittelt im Schritt 537 einen weiteren symmetrischen Gruppenschlüssel und verteilt diesen gemäß den Schritten 402, 404, 406, 408, 432, 434 und 436 an alle in der Gruppe verbliebenen Endgeräte.

In einem Schritt 510 wird eine Nachricht gemäß dem aktuell gültigen symmetrischen Gruppenschlüssel, welcher in den Schritten 532 und 534 ausgewählt wurde, verschlüsselt und in einem Schritt 512 an das Endgerät NN1 übersandt, um in einem Schritt 514 vom Endgerät NN1 entschlüsselt zu werden.

In einem Schritt 539 ermittelt das Endgerät NN1 eine Wechselindikation, welche einen Wechsel des Gruppenschlüssels indiziert. Das erste Endgerät NN1 fährt ausgehend von dem Schritt 539 mit dem zu Figur 4 erläuterten Schrittt 428 fort, um den Gruppenschlüssel zu wechseln.

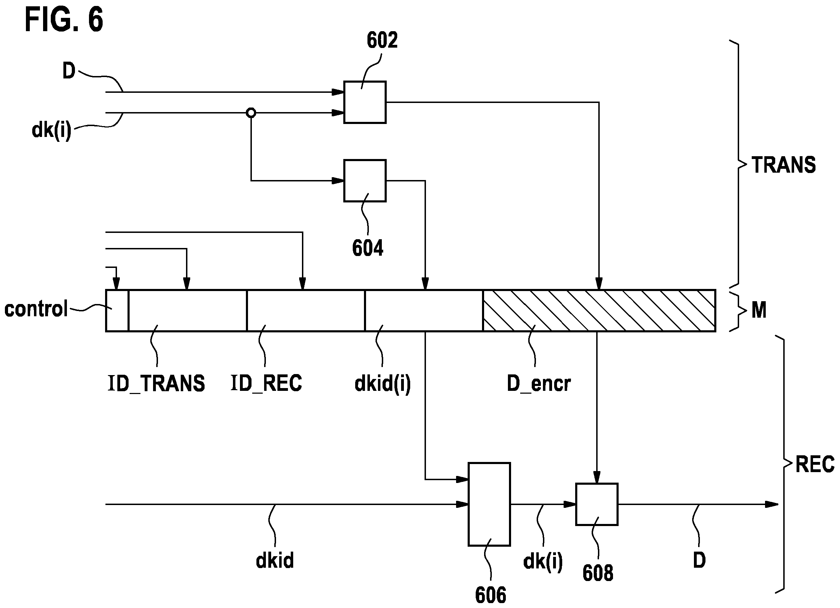

Figur 6 zeigt ein schematisches Blockdiagramm zur Ermittlung und Verarbeitung einer Nachricht M beim Versand und Empfang mittels des symmetrischen Gruppenschlüssels oder des symmetrischen Paarschlüssels. Ein Block 602 eines versendenden Endgeräts TRANS verschlüsselt ermittelte Daten D mithilfe des aktuell gültigen symmetrischen Gruppenschlüssels dk(i) oder des aktuell gültigen symmetrischen Paarschlüssels zu verschlüsselten Daten D_encr. Der Block 602 verwendet zur Ermittlung der verschlüsselten Daten D_encr ein Verfahren zur authenticated encryption, beispielsweise AES-CCM (Advanced Encryption Standard Counter Mode).

Ein Block 604 ermittelt eine Schlüsselkennung dkid(i) in Abhängigkeit von dem aktuell gültigen symmetrischen Gruppenschlüssel dk(i) oder dem aktuell gültigen symmetrischen Paarschlüssel. Beispielsweise werden die unteren 8 Bytes eines SHA-256-Hashes des aktuell gültigen symmetrischen Gruppenschlüssels dk(i) oder des aktuell gültigen symmetrischen Paarschlüssels ermittelt und als Schlüsselkennung dkid(i) verwendet.

Eine Kennung ID_TRANS zur Identifikation des sendenden Endgerät TRANS und eine Kennung ID_REC zur Identifikation des empfangenden Endgerät REC werden vom sendenden Endgerät TRANS in die Nachricht M eingefügt. Die Kontrollinformationen control umfassen beispielsweise eine Information, welche die Nachricht M als Unicast- Nachricht oder Broadcast-Nachricht kennzeichnet.

Nach Empfang der Nachricht M durch das empfangende Endgerät REC ermittelt ein Block 606 aus einer Anzahl von dem Endgerät REC bekannten Schlüsselkennungen dkid den zu der empfangenen Schlüsselkennung dkid(i) passenden symmetrischen Gruppenschlüssel dk(i) oder den zu der empfangenen Schlüsselkennung dkid(i) passenden symmetrischen Paarschlüssel. Ein Block 608 ermittelt die unverschlüsselten Daten D in Abhängigkeit von den empfangenen verschlüsselten Daten D_encr und dem passenden symmetrischen Gruppenschlüssel dk(i) oder dem passenden symmetrischen Paarschlüssel.

## Patentansprüche

1. Ein erstes fahrzeugseitiges Endgerät (NN1) einer Gruppe von Endgeräten eines Funkkommunikationsnetzwerks, wobei die Gruppe von Endgeräten ein zweites fahrzeugseitiges Endgerät (NN2) aufweist, wobei das erste fahrzeugseitige Endgerät (NN1) mindestens einen Prozessor, mindestens einen Speicher mit Computerprogrammcode, mindestens ein Kommunikationsmodul und mindestens eine Antenne umfasst, wobei der Computerprogrammcode so konfiguriert ist, dass er mit dem mindestens einen Prozessor, dem mindestens einen Kommunikationsmodul und der mindestens einen Antenne bewirkt, dass das erste fahrzeugseitige Endgerät (NN1)
wenigstens einen symmetrischen Gruppenschlüssel, welcher der Gruppe von Endgeräten zugeordnet ist, ermittelt (202; 302; 402; 502),
den wenigstens einen symmetrischen Gruppenschlüssel mit einem symmetrischen Paarschlüssel, welcher nur dem ersten und dem zweiten fahrzeugseitigen Endgerät (NN1, NN2) zugeordnet ist, verschlüsselt (204; 304; 404; 504),
den verschlüsselten symmetrischen Gruppenschlüssel in Richtung des zweiten fahrzeugseitigen Endgeräts (NN2) versendet (206; 306; 406; 506),
eine verschlüsselte Nachricht von dem zweiten fahrzeugseitigen Endgerät (NN2) empfängt (212; 312; 412; 512),
die verschlüsselte Nachricht in Abhängigkeit von dem ermittelten symmetrischen Gruppenschlüssel entschlüsselt (214; 314; 414; 514),
einen neuen symmetrischen Gruppenschlüssel ermittelt (402),
den neuen symmetrischen Gruppenschlüssel in Abhängigkeit von dem symmetrischen Paarschlüssel, welcher dem zweiten fahrzeugseitigen Endgerät (NN2) zugeordnet ist, verschlüsselt (404), und
den verschlüsselten neuen symmetrischen Gruppenschlüssel in Richtung des zweiten fahrzeugseitigen Endgeräts (NN2) versendet (406),
eine positive Empfangsbestätigung, welche den Empfang des neuen symmetrischen Gruppenschlüssels durch das zweite fahrzeugseitige Endgerät bestätigt (NN2), empfängt (432),
einen neuen symmetrischen Paarschlüssel, welcher nur dem ersten und dem zweiten fahrzeugseitigen Endgerät (NN1, NN2) zugeordnet ist, in Abhängigkeit von dem Empfang der positiven Empfangsbestätigung ermittelt (434), und
den neuen symmetrischen Paarschlüssel als gültigen symmetrischen Paarschlüssel auswählt.

2. Das erste fahrzeugseitige Endgerät (NN1) gemäß dem Anspruch 1, wobei das erste fahrzeugseitige Endgerät (NN1)
eine verschlüsselte Beitrittsanfrage ausgehend von dem zweiten fahrzeugseitigen Endgerät (NN2) empfängt,
die Beitrittsanfrage in Abhängigkeit von einem privaten asymmetrischen Schlüssel, welcher dem ersten fahrzeugseitigen Endgerät (NN1) zugeordnet ist, entschlüsselt,
wenigstens zwei symmetrische Gruppenschlüssel, welche der Gruppe von Endgeräten zugeordnet sind, ermittelt,
den symmetrischen Paarschlüssel ermittelt,
die wenigstens zwei symmetrischen Gruppenschlüssel und den ermittelten symmetrischen Paarschlüssel mit einem öffentlichen asymmetrischen Individualschlüssel, welcher dem zweiten Endgerät zugeordnet ist, verschlüsselt, und
die wenigstens zwei verschlüsselten symmetrischen Gruppenschlüssel und den ermittelten verschlüsselten symmetrischen Paarschlüssel in Richtung des zweiten fahrzeugseitigen Endgeräts (NN2) versendet.

3. Das erste fahrzeugseitige Endgerät (NN1) gemäß Anspruch 1 oder 2, wobei das erste fahrzeugseitige Endgerät (NN1)
einen Wechsel des symmetrischen Gruppenschlüssels ermittelt,
einen bereits ermittelten symmetrischen Gruppenschlüssel als gültigen symmetrischen Gruppenschlüssel auswählt,
einen neuen symmetrischen Gruppenschlüssel ermittelt,
den neuen symmetrischen Gruppenschlüssel in Abhängigkeit von dem symmetrischen Paarschlüssel, welcher dem zweiten fahrzeugseitigen Endgerät (NN2) zugeordnet ist, verschlüsselt, und
den verschlüsselten neuen symmetrischen Gruppenschlüssel in Richtung des zweiten fahrzeugseitigen Endgeräts (NN2) versendet.

4. Das erste fahrzeugseitige Endgerät (NN1) gemäß einem der vorigen Ansprüche, wobei das erste fahrzeugseitige Endgerät (NN1)
eine Austrittsanfrage ausgehend von einem dritten Endgerät (NN3) empfängt,
einen weiteren neuen symmetrischen Gruppenschlüssel ermittelt,
den weiteren neuen symmetrischen Gruppenschlüssel und eine Austrittsindikation in Abhängigkeit von dem symmetrischen Paarschlüssel, welcher dem ersten und dem zweiten Endgerät (NN1; NN2) zugeordnet ist, verschlüsselt,
den verschlüsselten weiteren neuen symmetrischen Gruppenschlüssel und die Austrittsindikation in Richtung des zweiten fahrzeugseitigen Endgeräts (NN2) versendet,
den weiteren neuen symmetrischen Gruppenschlüssel als aktuell gültigen Gruppenschlüssel auswählt,
einen weiteren neuen symmetrischen Paarschlüssel, welcher dem zweiten fahrzeugseitigen Endgerät (NN2) zugeordnet ist, ermittelt, und
den weiteren neuen symmetrischen Paarschlüssel als gültigen symmetrischen Paarschlüssel auswählt.

5. Das erste fahrzeugseitige Endgerät (NN1) gemäß einem der vorigen Ansprüche, wobei das erste fahrzeugseitige Endgerät (NN1)
die verschlüsselte Nachricht und eine verschlüsselte Signatur ausgehend von dem zweiten fahrzeugseitigen Endgerät (NN2) empfängt,
die verschlüsselte Nachricht und die verschlüsselte Signatur in Abhängigkeit von dem symmetrischen Gruppenschlüssel entschlüsselt, und
die Herkunft der Nachricht von dem zweiten fahrzeugseitigen Endgerät (NN2) in Abhängigkeit von der Signatur und in Abhängigkeit von einem öffentlichen Zertifikat, welches dem zweiten fahrzeugseitigen Endgerät (NN2) zugeordnet ist, verifiziert.

6. Ein Verfahren zum Betreiben eines ersten fahrzeugseitigen Endgeräts (NN1) einer Gruppe von Endgeräten eines Funkkommunikationsnetzwerks, wobei die Gruppe von Endgeräten ein zweites fahrzeugseitiges Endgerät (NN2) aufweist, wobei das erste fahrzeugseitige Endgerät (NN1)
wenigstens einen symmetrischen Gruppenschlüssel, welcher der Gruppe von Endgeräten zugeordnet ist, ermittelt (202; 302; 402; 502),
den wenigstens einen symmetrischen Gruppenschlüssel mit einem symmetrischen Paarschlüssel, welcher nur dem ersten und dem zweiten fahrzeugseitigen Endgerät (NN1, NN2) zugeordnet ist, verschlüsselt (204; 304; 404; 504),
den verschlüsselten symmetrischen Gruppenschlüssel in Richtung des zweiten fahrzeugseitigen Endgeräts (NN2) versendet (206; 306; 406; 506),
eine verschlüsselte Nachricht von dem zweiten fahrzeugseitigen Endgerät (NN2) empfängt (212; 312; 412; 512),
die verschlüsselte Nachricht in Abhängigkeit von dem ermittelten symmetrischen Gruppenschlüssel entschlüsselt (214; 314; 414; 514),
einen neuen symmetrischen Gruppenschlüssel ermittelt (402),
den neuen symmetrischen Gruppenschlüssel in Abhängigkeit von dem symmetrischen Paarschlüssel, welcher dem zweiten fahrzeugseitigen Endgerät (NN2) zugeordnet ist, verschlüsselt (404), und
den verschlüsselten neuen symmetrischen Gruppenschlüssel in Richtung des zweiten fahrzeugseitigen Endgeräts (NN2) versendet (406),
eine positive Empfangsbestätigung, welche den Empfang des neuen symmetrischen Gruppenschlüssels durch das zweite fahrzeugseitige Endgerät bestätigt (NN2), empfängt (432),
einen neuen symmetrischen Paarschlüssel, welcher nur dem ersten und dem zweiten fahrzeugseitigen Endgerät (NN1, NN2) zugeordnet ist, in Abhängigkeit von dem Empfang der positiven Empfangsbestätigung ermittelt (434), und
den neuen symmetrischen Paarschlüssel als gültigen symmetrischen Paarschlüssel auswählt.

7. Ein zweites fahrzeugseitiges Endgerät (NN2) einer Gruppe von Endgeräten eines Funkkommunikationsnetzwerks, wobei die Gruppe von Endgeräten ein erstes fahrzeugseitiges Endgerät (NN1) aufweist, wobei das zweite fahrzeugseitige Endgerät (NN2) mindestens einen Prozessor, mindestens einen Speicher mit Computerprogrammcode, mindestens ein Kommunikationsmodul und mindestens eine Antenne umfasst, wobei der Computerprogrammcode so konfiguriert ist, dass er mit dem mindestens einen Prozessor, dem mindestens einen Kommunikationsmodul und der mindestens einen Antenne bewirkt, dass das zweite fahrzeugseitige Endgerät (NN2)
wenigstens einen verschlüsselten symmetrischen Gruppenschlüssel, welcher der Gruppe von Endgeräten zugeordnet ist, ausgehend von dem ersten fahrzeugseitigen Endgerät (NN1) empfängt (206; 306; 406; 506),
den wenigstens einen verschlüsselten symmetrischen Gruppenschlüssel mit einem symmetrischen Paarschlüssel, welcher nur dem ersten und dem zweiten fahrzeugseitigen Endgerät (NN1; NN2) zugeordnet ist, entschlüsselt (208; 308; 408; 508),
eine Nachricht in Abhängigkeit von dem empfangenen entschlüsselten symmetrischen Gruppenschlüssel verschlüsselt (210; 310; 410; 510),
die verschlüsselte Nachricht in Richtung des ersten fahrzeugseitigen Endgeräts (NN1) sendet (212; 312; 412; 512),
einen neuen verschlüsselten symmetrischen Gruppenschlüssel empfängt (406),
den verschlüsselten symmetrischen Gruppenschlüssel in Abhängigkeit von dem aktuell gültigen symmetrischen Paarschlüssel entschlüsselt (408),
eine positive Empfangsbestätigung, welche den Empfang des neuen symmetrischen Gruppenschlüssels durch das zweite fahrzeugseitige Endgerät (NN2) bestätigt, versendet (432),
einen neuen symmetrischen Paarschlüssel, welcher nur dem ersten und dem zweiten fahrzeugseitigen Endgerät (NN1, NN2) zugeordnet ist, in Abhängigkeit von dem Versand der positiven Empfangsbestätigung ermittelt (436), und
den neuen symmetrischen Paarschlüssel als gültigen symmetrischen Paarschlüssel auswählt.

8. Das zweite fahrzeugseitige Endgerät (NN2) gemäß dem Anspruch 7, wobei das zweite fahrzeugseitige Endgerät (NN2)
eine Beitrittsanfrage in Abhängigkeit von einem öffentlichen asymmetrischen Schlüssel, welcher dem ersten fahrzeugseitigen Endgerät (NN1) zugeordnet ist, verschlüsselt,
die verschlüsselte Beitrittsanfrage in Richtung des ersten fahrzeugseitigen Endgeräts (NN1) versendet,
wenigstens zwei verschlüsselte symmetrische Gruppenschlüssel und einen verschlüsselten symmetrischen Paarschlüssel empfängt,
die wenigstens zwei verschlüsselten symmetrischen Gruppenschlüssel und den verschlüsselten symmetrischen Paarschlüssel in Abhängigkeit von einem privaten asymmetrischen Individualschlüssel, welcher dem zweiten Endgerät (NN2) zugeordnet ist, entschlüsselt.

9. Das zweite fahrzeugseitige Endgerät (NN2) gemäß dem Anspruch 7 oder 8, wobei das zweite fahrzeugseitige Endgerät (NN2)
einen Wechsel des symmetrischen Gruppenschlüssels ermittelt,
einen bereits empfangenen symmetrischen Gruppenschlüssel als gültigen symmetrischen Gruppenschlüssel auswählt,
einen neuen verschlüsselten symmetrischen Gruppenschlüssel ausgehend von dem ersten fahrzeugseitigen Endgerät (NN1) empfängt,
den neuen verschlüsselten symmetrischen Gruppenschlüssel in Abhängigkeit von dem symmetrischen Paarschlüssel, welcher dem zweiten fahrzeugseitigen Endgerät (NN2) zugeordnet ist, entschlüsselt.

10. Das zweite fahrzeugseitige Endgerät (NN2) gemäß einem der Ansprüche 7 bis 9, wobei das zweite fahrzeugseitige Endgerät (NN2)
einen verschlüsselten weiteren neuen symmetrischen Gruppenschlüssel und eine verschlüsselte Austrittsindikation empfängt,
den weiteren neuen symmetrischen Gruppenschlüssel und die Austrittsindikation in Abhängigkeit von dem symmetrischen Paarschlüssel, welcher dem zweiten Endgerät (NN2) zugeordnet ist, entschlüsselt,
den weiteren neuen symmetrischen Gruppenschlüssel in Abhängigkeit von der Austrittsindikation als aktuell gültigen Gruppenschlüssel auswählt,
einen weiteren neuen symmetrischen Paarschlüssel, welcher dem zweiten fahrzeugseitigen Endgerät (NN2) zugeordnet ist, ermittelt, und
den weiteren neuen symmetrischen Paarschlüssel in Abhängigkeit von der Austrittsindikation als gültigen symmetrischen Paarschlüssel auswählt.

11. Das zweite fahrzeugseitige Endgerät (NN2) gemäß einem der Ansprüche 7 bis 10, wobei das zweite fahrzeugseitige Endgerät (NN2)
eine Signatur in Abhängigkeit von der Nachricht und in Abhängigkeit von dem privaten asymmetrischen Schlüssel, welcher dem zweiten fahrzeugseitigen Endgerät (NN2) zugeordnet ist, ermittelt,
die Nachricht und die Signatur in Abhängigkeit von dem gültigen symmetrischen Gruppenschlüssel verschlüsselt, und
die verschlüsselte Nachricht und die verschlüsselte Signatur in Richtung des ersten fahrzeugseitigen Endgeräts (NN1) versendet.

12. Ein Verfahren zum Betreiben eines zweiten fahrzeugseitigen Endgeräts (NN2) einer Gruppe von Endgeräten eines Funkkommunikationsnetzwerks, wobei die Gruppe von Endgeräten ein erstes fahrzeugseitiges Endgerät (NN1) aufweist, wobei das zweite fahrzeugseitige Endgerät (NN2)
wenigstens einen verschlüsselten symmetrischen Gruppenschlüssel, welcher der Gruppe von Endgeräten zugeordnet ist, ausgehend von dem ersten fahrzeugseitigen Endgerät (NN1) empfängt (206; 306; 406; 506),
den wenigstens einen verschlüsselten symmetrischen Gruppenschlüssel mit einem symmetrischen Paarschlüssel, welcher nur dem ersten und dem zweiten fahrzeugseitigen Endgerät (NN1; NN2) zugeordnet ist, entschlüsselt (208; 308; 408; 508),
eine Nachricht in Abhängigkeit von dem empfangenen entschlüsselten symmetrischen Gruppenschlüssel verschlüsselt (210; 310; 410; 510),
die verschlüsselte Nachricht in Richtung des ersten fahrzeugseitigen Endgeräts (NN1) sendet (212; 312; 412; 512),
einen neuen verschlüsselten symmetrischen Gruppenschlüssel empfängt (406),
den verschlüsselten symmetrischen Gruppenschlüssel in Abhängigkeit von dem aktuell gültigen symmetrischen Paarschlüssel entschlüsselt (408),
eine positive Empfangsbestätigung, welche den Empfang des neuen symmetrischen Gruppenschlüssels durch das zweite fahrzeugseitige Endgerät (NN2) bestätigt, versendet (432),
einen neuen symmetrischen Paarschlüssel, welcher nur dem ersten und dem zweiten fahrzeugseitigen Endgerät (NN1, NN2) zugeordnet ist, in Abhängigkeit von dem Versand der positiven Empfangsbestätigung ermittelt (436), und
den neuen symmetrischen Paarschlüssel als gültigen symmetrischen Paarschlüssel auswählt.

## Claims

1. First vehicle-based terminal (NN1) of a group of terminals of a radio communication network, the group of terminals having a second vehicle-based terminal (NN2), wherein the first vehicle-based terminal (NN1) comprises at least one processor, at least one memory containing computer program code, at least one communication module and at least one antenna, the computer program code being configured such that it uses the at least one processor, the at least one communication module and the at least one antenna to cause the first vehicle-based terminal (NN1)
to determine (202; 302; 402; 502) at least one symmetrical group key that is associated with the group of terminals,
to encrypt (204; 304; 404; 504) the at least one symmetrical group key using a symmetrical pair key that is associated with only the first and the second vehicle-based terminal (NN1, NN2),
to send (206; 306; 406; 506) the encrypted symmetrical group key towards the second vehicle-based terminal (NN2),
to receive (212; 312; 412; 512) an encrypted message from the second vehicle-based terminal (NN2),
to decrypt (214; 314; 414; 514) the encrypted message on the basis of the determined symmetrical group key,
to determine (402) a new symmetrical group key,
to encrypt (404) the new symmetrical group key on the basis of the symmetrical pair key that is associated with the second vehicle-based terminal (NN2), and
to send (406) the encrypted new symmetrical group key towards the second vehicle-based terminal (NN2),
to receive (432) a positive acknowledgement of receipt that acknowledges receipt of the new symmetrical group key by the second vehicle-based terminal (NN2),
to determine (434) a new symmetrical pair key, which is associated with only the first and the second vehicle-based terminal (NN1, NN2), on the basis of receipt of the positive acknowledgement of receipt, and
to select the new symmetrical pair key as the valid symmetrical pair key.

2. First vehicle-based terminal (NN1) according to Claim 1, wherein the first vehicle-based terminal (NN1) receives an encrypted join request from the second vehicle-based terminal (NN2),
decrypts the join request on the basis of a private asymmetrical key that is associated with the first vehicle-based terminal (NN1),
determines at least two symmetrical group keys that are associated with the group of terminals,
determines the symmetrical pair key,
encrypts the at least two symmetrical group keys and the determined symmetrical pair key using a public asymmetrical individual key that is associated with the second terminal, and
sends the at least two encrypted symmetrical group keys and the determined encrypted symmetrical pair key towards the second vehicle-based terminal (NN2).

3. First vehicle-based terminal (NN1) according to Claim 1 or 2, wherein the first vehicle-based terminal (NN1)
determines a change of symmetrical group key,
selects an already determined symmetrical group key as the valid symmetrical group key,
determines a new symmetrical group key,
encrypts the new symmetrical group key on the basis of the symmetrical pair key that is associated with the second vehicle-based terminal (NN2), and
sends the encrypted new symmetrical group key towards the second vehicle-based terminal (NN2).

4. First vehicle-based terminal (NN1) according to one of the preceding claims, wherein the first vehicle-based terminal (NN1)
receives a leave request from a third terminal (NN3), determines a further new symmetrical group key,
encrypts the further new symmetrical group key and a leave indication on the basis of the symmetrical pair key that is associated with the first and the second terminal (NN1; NN2),
sends the encrypted further new symmetrical group key and the leave indication towards the second vehicle-based terminal (NN2),
selects the further new symmetrical group key as the currently valid group key,
determines a further new symmetrical pair key that is associated with the second vehicle-based terminal (NN2), and
selects the further new symmetrical pair key as the valid symmetrical pair key.

5. First vehicle-based terminal (NN1) according to one of the preceding claims, wherein the first vehicle-based terminal (NN1)
receives the encrypted message and an encrypted signature from the second vehicle-based terminal (NN2),
decrypts the encrypted message and the encrypted signature on the basis of the symmetrical group key, and verifies the origin of the message from the second vehicle-based terminal (NN2) on the basis of the signature and on the basis of a public certificate that is associated with the second vehicle-based terminal (NN2) .

6. Method for operating a first vehicle-based terminal (NN1) of a group of terminals of a radio communication network, the group of terminals having a second vehicle-based terminal (NN2), wherein the first vehicle-based terminal (NN1)
determines (202; 302; 402; 502) at least one symmetrical group key that is associated with the group of terminals, encrypts (204; 304; 404; 504) the at least one symmetrical group key using a symmetrical pair key that is associated with only the first and the second vehicle-based terminal (NN1, NN2),
sends (206; 306; 406; 506) the encrypted symmetrical group key towards the second vehicle-based terminal (NN2),
receives (212; 312; 412; 512) an encrypted message from the second vehicle-based terminal (NN2),
decrypts (214; 314; 414; 514) the encrypted message on the basis of the determined symmetrical group key, determines (402) a new symmetrical group key,
encrypts (404) the new symmetrical group key on the basis of the symmetrical pair key that is associated with the second vehicle-based terminal (NN2), and
sends (406) the encrypted new symmetrical group key towards the second vehicle-based terminal (NN2), receives (432) a positive acknowledgement of receipt that acknowledges receipt of the new symmetrical group key by the second vehicle-based terminal (NN2),
determines (434) a new symmetrical pair key, which is associated with only the first and the second vehicle-based terminal (NN1, NN2), on the basis of receipt of the positive acknowledgement of receipt, and
selects the new symmetrical pair key as the valid symmetrical pair key.

7. Second vehicle-based terminal (NN2) of a group of terminals of a radio communication network, the group of terminals having a first vehicle-based terminal (NN1), wherein the second vehicle-based terminal (NN2) comprises at least one processor, at least one memory containing computer program code, at least one communication module and at least one antenna, the computer program code being configured such that it uses the at least one processor, the at least one communication module and the at least one antenna to cause the second vehicle-based terminal (NN2)
to receive (206; 306; 406; 506) from the first vehicle-based terminal (NN1) at least one encrypted symmetrical group key that is associated with the group of terminals, to decrypt (208; 308; 408; 508) the at least one encrypted symmetrical group key using a symmetrical pair key that is associated with only the first and the second vehicle-based terminal (NN1; NN2),
to encrypt (210; 310; 410; 510) a message on the basis of the received decrypted symmetrical group key,
to send (212; 312; 412; 512) the encrypted message towards the first vehicle-based terminal (NN1),
to receive (406) a new encrypted symmetrical group key, to decrypt (408) the encrypted symmetrical group key on the basis of the currently valid symmetrical pair key, to send (432) a positive acknowledgement of receipt that acknowledges receipt of the new symmetrical group key by the second vehicle-based terminal (NN2),
to determine (436) a new symmetrical pair key, which is associated with only the first and the second vehicle-based terminal (NN1, NN2), on the basis of the sending of the positive acknowledgement of receipt, and
to select the new symmetrical pair key as the valid symmetrical pair key.

8. Second vehicle-based terminal (NN2) according to Claim 7, wherein the second vehicle-based terminal (NN2) encrypts a join request on the basis of a public asymmetrical key that is associated with the first vehicle-based terminal (NN1),
sends the encrypted join request towards the first vehicle-based terminal (NN1),
receives at least two encrypted symmetrical group keys and an encrypted symmetrical pair key,
decrypts the at least two encrypted symmetrical group keys and the encrypted symmetrical pair key on the basis of a private asymmetrical individual key that is associated with the second terminal (NN2).

9. Second vehicle-based terminal (NN2) according to Claim 7 or 8, wherein the second vehicle-based terminal (NN2)
determines a change of symmetrical group key,
selects an already received symmetrical group key as the valid symmetrical group key,
receives a new encrypted symmetrical group key from the first vehicle-based terminal (NN1),
decrypts the new encrypted symmetrical group key on the basis of the symmetrical pair key that is associated with the second vehicle-based terminal (NN2).

10. Second vehicle-based terminal (NN2) according to one of Claims 7 to 9, wherein the second vehicle-based terminal (NN2)
receives an encrypted further new symmetrical group key and an encrypted leave indication,
decrypts the further new symmetrical group key and the leave indication on the basis of the symmetrical pair key that is associated with the second terminal (NN2), selects the further new symmetrical group key as the currently valid group key on the basis of the leave indication,
determines a further new symmetrical pair key that is associated with the second vehicle-based terminal (NN2), and
selects the further new symmetrical pair key as the valid symmetrical pair key on the basis of the leave indication.

11. Second vehicle-based terminal (NN2) according to one of Claims 7 to 10, wherein the second vehicle-based terminal (NN2)
determines a signature on the basis of the message and on the basis of the private asymmetrical key that is associated with the second vehicle-based terminal (NN2), encrypts the message and the signature on the basis of the valid symmetrical group key, and
sends the encrypted message and the encrypted signature towards the first vehicle-based terminal (NN1).

12. Method for operating a second vehicle-based terminal (NN2) of a group of terminals of a radio communication network, the group of terminals having a first vehicle-based terminal (NN1), wherein the second vehicle-based terminal (NN2)
receives (206; 306; 406; 506) from the first vehicle-based terminal (NN1) at least one encrypted symmetrical group key that is associated with the group of terminals, decrypts (208; 308; 408; 508) the at least one encrypted symmetrical group key using a symmetrical pair key that is associated with only the first and the second vehicle-based terminal (NN1; NN2),
encrypts (210; 310; 410; 510) a message on the basis of the received decrypted symmetrical group key,
sends (212; 312; 412; 512) the encrypted message towards the first vehicle-based terminal (NN1),
receives (406) a new encrypted symmetrical group key, decrypts (408) the encrypted symmetrical group key on the basis of the currently valid symmetrical pair key, sends (432) a positive acknowledgement of receipt that acknowledges receipt of the new symmetrical group key by the second vehicle-based terminal (NN2),
determines (436) a new symmetrical pair key, which is associated with only the first and the second vehicle-based terminal (NN1, NN2), on the basis of the sending of the positive acknowledgement of receipt, and
selects the new symmetrical pair key as the valid symmetrical pair key.

## Revendications

1. Premier terminal côté véhicule (NN1) d'un groupe de terminaux d'un réseau de radiocommunication, le groupe de terminaux comprenant un deuxième terminal côté véhicule (NN2), le premier terminal côté véhicule (NN1) comportant au moins un processeur, au moins une mémoire pourvue d'un code de programme informatique, au moins un module de communication et au moins une antenne, le code de programme informatique étant configuré de telle sorte qu'il agit avec l'au moins un processeur, l'au moins un module de communication et l'au moins une antenne de sorte que le premier terminal côté véhicule (NN1) détermine (202 ; 302 ; 402 ; 502) au moins une clé de groupe symétrique qui est associée au groupe de terminaux,
crypte (204 ; 304 ; 404 ; 504) l'au moins une clé de groupe symétrique avec une clé de paire symétrique, laquelle est associée uniquement au premier et au deuxième terminal côté véhicule (NN1, NN2),
envoie (206 ; 306 ; 406 ; 506) la clé de groupe symétrique cryptée en direction du deuxième terminal côté véhicule (NN2),
reçoit (212 ; 312 ; 412 ; 512) un message crypté en provenance du deuxième terminal côté véhicule (NN2), décrypte (214 ; 314 ; 414 ; 514) le message crypté en fonction de la clé de groupe symétrique déterminée, détermine (402) une nouvelle clé de groupe symétrique, crypte (404) la nouvelle clé de groupe symétrique en fonction de la clé de paire symétrique qui est associée au deuxième terminal côté véhicule (NN2), et
envoie (406) la nouvelle clé de groupe symétrique cryptée en direction du deuxième terminal côté véhicule (NN2), reçoit (432) une confirmation de réception positive qui confirme la réception de la nouvelle clé de groupe symétrique par le deuxième terminal côté véhicule (NN2), détermine (434) une nouvelle clé de paire symétrique, laquelle est associée uniquement au premier et au deuxième terminal côté véhicule (NN1, NN2), en fonction de la réception de la confirmation de réception positive, et
sélectionne la nouvelle clé de paire symétrique en tant que clé de paire symétrique valable.

2. Premier terminal côté véhicule (NN1) selon la revendication 1, le premier terminal côté véhicule (NN1) recevant une demande d'adhésion cryptée en provenance du deuxième terminal côté véhicule (NN2),
décryptant la demande d'adhésion en fonction d'une clé privée asymétrique qui est associée au premier terminal côté véhicule (NN1),
déterminant au moins deux clés de groupe symétriques associées au groupe de terminaux,
déterminant la clé de paire symétrique,
cryptant les au moins deux clés de groupe symétriques et la clé de paire symétrique déterminée avec une clé individuelle asymétrique publique qui est associée au deuxième terminal, et
envoyant les au moins deux clés de groupe symétriques cryptées et la clé de paire symétrique cryptée déterminée en direction du deuxième terminal côté véhicule (NN2).

3. Premier terminal côté véhicule (NN1) selon la revendication 1 ou 2, le premier terminal côté véhicule (NN1)
déterminant un changement de la clé de groupe symétrique,
sélectionnant une clé de groupe symétrique déjà déterminée en tant que clé de groupe symétrique valable, déterminant une nouvelle clé de groupe symétrique, cryptant la nouvelle clé de groupe symétrique en fonction de la clé de paire symétrique qui est associée au deuxième terminal côté véhicule (NN2), et
envoyant la nouvelle clé de groupe symétrique cryptée en direction du deuxième terminal côté véhicule (NN2).

4. Premier terminal côté véhicule (NN1) selon l'une des revendications précédentes, le premier terminal côté véhicule (NN1)
recevant une demande de sortie qui émane d'un troisième terminal (NN3),
déterminant une nouvelle clé de groupe symétrique supplémentaire,
cryptant la nouvelle clé de groupe symétrique supplémentaire et une indication de sortie en fonction de la clé de paire symétrique, laquelle est associée aux premier et deuxième terminaux (NN1 ; NN2),
envoyant la nouvelle clé de groupe symétrique supplémentaire cryptée et l'indication de sortie en direction du deuxième terminal côté véhicule (NN2), sélectionnant la nouvelle clé de groupe symétrique supplémentaire en tant que clé de groupe actuellement valable,
déterminant une nouvelle clé de paire symétrique supplémentaire, laquelle est associée au deuxième terminal côté véhicule (NN2), et
sélectionnant la nouvelle clé de paire symétrique supplémentaire en tant que clé de paire symétrique valable.

5. Premier terminal côté véhicule (NN1) selon l'une des revendications précédentes, le premier terminal côté véhicule (NN1)
recevant le message crypté et une signature cryptée émanant du deuxième terminal côté véhicule (NN2), décryptant le message crypté et la signature cryptée en fonction de la clé de groupe symétrique, et
vérifiant l'origine du message du deuxième terminal côté véhicule (NN2) en fonction de la signature et en fonction d'un certificat public, lequel est associé au deuxième terminal côté véhicule (NN2).

6. Procédé pour faire fonctionner un premier terminal côté véhicule (NN1) d'un groupe de terminaux d'un réseau de radiocommunication, le groupe de terminaux comprenant un deuxième terminal côté véhicule (NN2), le premier terminal côté véhicule (NN1)
déterminant (202 ; 302 ; 402 ; 502) au moins une clé de groupe symétrique qui est associée au groupe de terminaux,
cryptant (204 ; 304 ; 404 ; 504) l'au moins une clé de groupe symétrique avec une clé de paire symétrique, laquelle est associée uniquement au premier et au deuxième terminal côté véhicule (NN1, NN2),
envoyant (206 ; 306 ; 406 ; 506) la clé de groupe symétrique cryptée en direction du deuxième terminal côté véhicule (NN2),
recevant (212 ; 312 ; 412 ; 512) un message crypté en provenance du deuxième terminal côté véhicule (NN2), décryptant (214 ; 314 ; 414 ; 514) le message crypté en fonction de la clé de groupe symétrique déterminée, déterminant (402) une nouvelle clé de groupe symétrique, cryptant (404) la nouvelle clé de groupe symétrique en fonction de la clé de paire symétrique qui est associée au deuxième terminal côté véhicule (NN2), et
envoyant (406) la nouvelle clé de groupe symétrique cryptée en direction du deuxième terminal côté véhicule (NN2),
recevant (432) une confirmation de réception positive qui confirme la réception de la nouvelle clé de groupe symétrique par le deuxième terminal côté véhicule (NN2), déterminant (434) une nouvelle clé de paire symétrique, laquelle est associée uniquement au premier et au deuxième terminal côté véhicule (NN1, NN2), en fonction de la réception de la confirmation de réception positive, et
sélectionnant la nouvelle clé de paire symétrique en tant que clé de paire symétrique valable.

7. Deuxième terminal côté véhicule (NN2) d'un groupe de terminaux d'un réseau de radiocommunication, le groupe de terminaux comprenant un premier terminal côté véhicule (NN1), le deuxième terminal côté véhicule (NN2) comportant au moins un processeur, au moins une mémoire pourvue d'un code de programme informatique, au moins un module de communication et au moins une antenne, le code de programme informatique étant configuré de telle sorte qu'il agit avec l'au moins un processeur, l'au moins un module de communication et l'au moins une antenne de sorte que le deuxième terminal côté véhicule (NN2) reçoit (206 ; 306 ; 406 ; 506) au moins une clé de groupe symétrique cryptée associée au groupe de terminaux, qui émane du premier terminal côté véhicule (NN1),
décrypte (208 ; 308 ; 408 ; 508) l'au moins une clé de groupe symétrique cryptée avec une clé de paire symétrique, laquelle est associée uniquement au premier et au deuxième terminal côté véhicule (NN1, NN2), crypte (210 ; 310 ; 410 ; 510) un message en fonction de la clé de groupe symétrique décryptée reçue,
envoie (212 ; 312 ; 412 ; 512) le message crypté en direction du premier terminal côté véhicule (NN1), reçoit (406) une nouvelle clé de groupe symétrique cryptée,
décrypte (408) la clé de groupe symétrique cryptée en fonction de la clé de paire symétrique actuellement valable,
envoie (432) une confirmation de réception positive, laquelle confirme la réception de la nouvelle clé de groupe symétrique par le deuxième terminal côté véhicule (NN2),
détermine (436) une nouvelle clé de paire symétrique, laquelle est associée uniquement au premier et au deuxième terminal côté véhicule (NN1, NN2), en fonction de l'envoi de la confirmation de réception positive, et sélectionne la nouvelle clé de paire symétrique en tant que clé de paire symétrique valable.

8. Deuxième terminal côté véhicule (NN2) selon la revendication 7, le deuxième terminal côté véhicule (NN2) cryptant une demande d'adhésion en fonction d'une clé asymétrique publique qui est associée au premier terminal côté véhicule (NN1),
envoyant la demande d'adhésion cryptée en direction du premier terminal côté véhicule (NN1),
recevant au moins deux clés de groupe symétriques cryptées et une clé de paire symétrique cryptée, décryptant les au moins deux clés de groupe symétriques cryptées et la clé de paire symétrique cryptée en fonction d'une clé individuelle asymétrique publique, laquelle est associée au deuxième terminal (NN2).

9. Deuxième terminal côté véhicule (NN2) selon la revendication 7 ou 8, le deuxième terminal côté véhicule (NN2)
déterminant un changement de la clé de groupe symétrique, sélectionnant une clé de groupe symétrique déjà reçue en tant que clé de groupe symétrique valable,
recevant une nouvelle clé de groupe symétrique cryptée qui émane du premier terminal côté véhicule (NN1), décryptant la nouvelle clé de groupe symétrique cryptée en fonction de la clé de paire symétrique qui est associée au deuxième terminal côté véhicule (NN2).

10. Deuxième terminal côté véhicule (NN2) selon l'une des revendications 7 à 9, le deuxième terminal côté véhicule (NN2)
recevant une nouvelle clé de groupe symétrique supplémentaire cryptée et une indication de sortie cryptée,
décryptant la nouvelle clé de groupe symétrique supplémentaire et l'indication de sortie en fonction de la clé de paire symétrique, laquelle est associée au deuxième terminal (NN2),
sélectionnant la nouvelle clé de groupe symétrique supplémentaire en fonction de l'indication de sortie en tant que clé de groupe actuellement valable, déterminant une nouvelle clé de paire symétrique supplémentaire, laquelle est associée au deuxième terminal côté véhicule (NN2), et
sélectionnant la nouvelle clé de paire symétrique supplémentaire en fonction de l'indication de sortie en tant que clé de paire symétrique valable.

11. Deuxième terminal côté véhicule (NN2) selon l'une des revendications 7 à 10, le deuxième terminal côté véhicule (NN2)
déterminant une signature en fonction du message et en fonction de la clé privée asymétrique qui est associée au deuxième terminal côté véhicule (NN2),
cryptant le message et la signature en fonction de la clé de groupe symétrique valable, et
envoyant le message crypté et la signature cryptée en direction du premier terminal côté véhicule (NN1).

12. Procédé pour faire fonctionner un deuxième terminal côté véhicule (NN2) d'un groupe de terminaux d'un réseau de radiocommunication, le groupe de terminaux comprenant un premier terminal côté véhicule (NN1), le deuxième terminal côté véhicule (NN2)
recevant (206 ; 306 ; 406 ; 506) au moins une clé de groupe symétrique cryptée associée au groupe de terminaux, qui émane du premier terminal côté véhicule (NN1),
décryptant (208 ; 308 ; 408 ; 508) l'au moins une clé de groupe symétrique cryptée avec une clé de paire symétrique, laquelle est associée uniquement au premier et au deuxième terminal côté véhicule (NN1, NN2), cryptant (210 ; 310 ; 410 ; 510) un message en fonction de la clé de groupe symétrique décryptée reçue, envoyant (212 ; 312 ; 412 ; 512) le message crypté en direction du premier terminal côté véhicule (NN1), recevant (406) une nouvelle clé de groupe symétrique cryptée,
décryptant (408) la clé de groupe symétrique cryptée en fonction de la clé de paire symétrique actuellement valable,
envoyant (432) une confirmation de réception positive, laquelle confirme la réception de la nouvelle clé de groupe symétrique par le deuxième terminal côté véhicule (NN2),
déterminant (436) une nouvelle clé de paire symétrique, laquelle est associée uniquement au premier et au deuxième terminal côté véhicule (NN1, NN2), en fonction de l'envoi de la confirmation de réception positive, et sélectionnant la nouvelle clé de paire symétrique en tant que clé de paire symétrique valable.
